(19) **Europäisches Patentamt / European Patent Office / Office européen des brevets**

(11) **EP 4 207 653 A1**

(12) **EUROPEAN PATENT APPLICATION**

(43) Date of publication:
**05.07.2023 Bulletin 2023/27**

(21) Application number: **22215015.3**

(22) Date of filing: **20.12.2022**

(51) International Patent Classification (IPC):
**H04L 1/1607** (2023.01)   **H04L 1/08** (2006.01)
**H04L 1/1829** (2023.01)   **H04L 1/1867** (2023.01)

(52) Cooperative Patent Classification (CPC):
**H04L 1/08; H04L 1/1671; H04L 1/1861;
H04L 1/1896**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2021 US 202163294852 P**

(71) Applicant: **Industrial Technology Research
Institute
Chutung, Hsinchu 310401 (TW)**

(72) Inventors:
• **HSIEH, Chia-Wen
310017 Hsinchu (TW)**
• **LEE, Chien-Min
324 Taoyuan (TW)**

(74) Representative: **Kurig, Thomas
Becker Kurig & Partner
Patentanwälte mbB
Bavariastraße 7
80336 München (DE)**

(54) **METHOD FOR PERFORMING HYBRID AUTOMATIC REPEAT REQUEST TRANSMISSION AND USER EQUIPMENT**

(57)    A method for performing a hybrid automatic repeat request (HARQ) transmission and a user equipment (UE) are provided. The method at the UE comprises the followings. Receiving (S205) a first configuration related to slot aggregation for physical downlink shared channel (PDSCH) reception. Receiving (S210) a downlink control information (DCI) (301). Receiving (S215) a PDSCH indicted by the DCI (301) across a first number of aggregated slots. Transmitting (S220) a codebook (610, 710, 810, 1110, 1210, 1310, 1410, 1510, 1610, 1710) comprising a first information (611, 711, 811, 1111, 1211, 1311, 1411, 1521, 1621) and a second information (612, 712-1, 712-2, 812-1, 812-2, 1112, 1212, 1312, 1412, 1522, 1622).

```
┌──────────────────────────────────────────┐
│ Receiving a first configuration related   │──  S205
│ to slot aggregation for PDSCH reception    │
└──────────────────────────────────────────┘
                    │
                    ▼
┌──────────────────────────────────────────┐
│ Receiving a DCI                            │──  S210
└──────────────────────────────────────────┘
                    │
                    ▼
┌──────────────────────────────────────────┐
│ Receiving a PDSCH indicted by the DCI      │──  S215
│ across a first number of aggregated slots  │
└──────────────────────────────────────────┘
                    │
                    ▼
┌──────────────────────────────────────────┐
│ Transmitting a codebook comprising a first │──  S220
│ information and a second information        │
└──────────────────────────────────────────┘
```

**FIG. 2**

EP 4 207 653 A1

**Description**

**BACKGROUND**

Technical Field

The disclosure is directed to a method for performing a hybrid automatic repeat request (HARQ) transmission and a user equipment.

Description of Related Art

The 3rd generation partnership project (3GPP) is an umbrella term for a number of standards organizations which develop protocols for mobile telecommunications. For example, 5G NR (new radio) is one protocol developed by 3GPP. Data packet is transmitted from transmitter to receiver. When the data packet arrives at receiver, receiver decodes the data packet and sends a corresponding feedback to the transmitter. If the receiver decodes the data packet correctly, the feedback can be a positive-acknowledgment (ACK). If the receiver decodes the data packet incorrectly, the feedback can be a negative-acknowledgment (NACK). The feedback is received by physical (PHY) layer first, and then it is passed to medium access control (MAC) layer. Network starts PHY layer retransmission if needed (e.g. if the feedback is a NACK). PHY layer provides one or more (re)transmissions to increase the chances of correct decoding. Therefore, hybrid automatic repeat request (HARQ) process operates at different layers. Specifically, the transmitter transmits a data packet, it temporarily stops and waits for the feedback from the receiver. After receiving the ACK, the transmitter stops the data packet. After receiving the NACK, the transmitter retransmits the data packet again via PHY layer.
In 5G NR, 3GPP specification has defined a codebook for carrying the feedback corresponding to the HARQ process. The codebook is comprised of a sequence of bits, which is constructed by feedback corresponding to multiple occasions for physical downlink shared channel (PDSCH) receptions. 3GPP has defined two type of codebook is defined, including Type-1 codebook and Type-2 codebook. The payload size of Type-2 codebook is dynamic, and the payload size of Type-1 codebook is preconfigured/predetermined. For reducing the probability of incorrectly decoding, slot aggregation is applied for scheduling the same data packet across multiple slots. Therefore, further improvements/enhancements can be considered for improving the resource utilization.

**SUMMARY**

The disclosure provides a method for performing HARQ transmission and a user equipment.
A method for performing a hybrid automatic repeat request (HARQ) transmission at a user equipment (UE) according to the disclosure comprises: receiving a first configuration related to slot aggregation for physical downlink shared channel (PDSCH) reception; receiving a downlink control information (DCI); receiving a PDSCH indicted by the DCI across a first number of aggregated slots; and transmitting a codebook comprising a first information and a second information.
In an embodiment of the disclosure, the PDSCH comprises at least one transport block (TB), and the transport block comprises a plurality of code blocks (CBs).
In an embodiment of the disclosure, the first configuration is indicated via higher layer signaling.
In an embodiment of the disclosure, the higher layer signaling comprises at least one of the following signaling: a radio resource control (RRC) signaling, a medium access control (MAC) signaling, or a radio link control (RLC) signaling.
In an embodiment of the disclosure, the first number of aggregated slots is determined according to the first configuration.
In an embodiment of the disclosure, if the DCI indicates that the PDSCH comprises a retransmitted transport block, the first number of aggregated slots is determined according to the first configuration or the DCI.
In an embodiment of the disclosure, wherein if the DCI indicates that the PDSCH comprises a newly transmitted transport block, the first number of aggregated slots is determined according to the first configuration.
In an embodiment of the disclosure, if the UE is configured with transport block based (TB-based) transmission, a size of the codebook is related to a first value wherein the first value is related to the number of occasions for candidate PDSCH receptions.
In an embodiment of the disclosure, if the UE is configured with code block groups based (CBG-based) transmission, a size of the codebook is related to a first value and a second value wherein the first value is related to the number of occasions for candidate PDSCH receptions and the second value is related to one of followings: a maximum number of code block groups per transport block, a fixed value, a pre-determined value, a preconfigured value, or a configurable value.
In an embodiment of the disclosure, the first information comprises a positive acknowledgement (ACK) or a negative acknowledgement (NACK) associated with a HARQ process for the PDSCH.

In an embodiment of the disclosure, a number of available bits for carrying the second information is determined according to at least a size of the codebook and a size of the first information.

In an embodiment of the disclosure, the second information carried in the codebook is determined with a priority order.

In an embodiment of the disclosure, the priority order is predetermined or default.

In an embodiment of the disclosure, the priority order is determined according to at least one of following parameters: symbol number, slot number, subframe number, frame number, serving cell identifier, or bandwidth part identifier.

In an embodiment of the disclosure, the second information carried in the codebook is determined according to at least one of the following parameters: the number of available bits in the codebook, or the priority order.

In an embodiment of the disclosure, the second information comprises at least one of the following parameters: information related to battery life, information related to signal to noise plus interference ratio (SINR), information related to modulation and coding scheme (MCS), information related to channel quality indication (CQI), information related to quasi co-location (QCL) assumption, or information related to transmission power.

In an embodiment of the disclosure, the information related to SINR is determined according to at least one of following radio resources: the PDSCH reception, a reference signal of a serving cell, or a reference signal of neighbor cell.

In an embodiment of the disclosure, the information related to CQI is determined according to at least one of following radio resources: the PDSCH reception, a reference signal of a serving cell, or a reference signal of neighbor cell.

In an embodiment of the disclosure, the information related to QCL assumption is determined according to at least one of following radio resources: the PDSCH reception, a reference signal of a serving cell, or a reference signal of neighbor cell.

In an embodiment of the disclosure, the information related to transmission power is determined according to at least one of following radio resources: the PDSCH reception, a reference signal of a serving cell, or a reference signal of neighbor cell.

In an embodiment of the disclosure, in response to the first information comprises a NACK, the second information comprises a second number of aggregated slots.

In an embodiment of the disclosure, the method further comprises: receiving a second configuration related to code block groups of the PDSCH reception, wherein the code block groups are grouped from a plurality of code blocks comprised in a transport block of the PDSCH.

In an embodiment of the disclosure, the second configuration is indicated via higher layer signaling.

In an embodiment of the disclosure, in response to the first information comprises a NACK, the second information comprises HARQ-ACK feedback for the code block groups of the PDSCH.

In an embodiment of the disclosure, in response to the first information comprises a NACK, the second information comprises HARQ-ACK feedback for at least one group of code blocks of the PDSCH.

In an embodiment of the disclosure, the method further comprises: obtaining the maximum number of the code block groups of the transport block according to the second configuration.

In an embodiment of the disclosure, the method further comprises: grouping the code blocks according to the maximum number of code block groups and the number of available bits for carrying the second information.

In an embodiment of the disclosure, the grouping method of the code blocks comprises: calculating $M=\min(N, C)$, wherein N is the maximum number of code block groups per transport block, and C is the number of available bits for carrying the second information; the grouping method of the code blocks is obtained based on following: calculating $M_1=\mathrm{mod}(C_1, M)$,

$$K_1 = \left\lceil \frac{C_1}{M} \right\rceil,$$

and $K_2 = \left\lfloor \dfrac{C_1}{M} \right\rfloor$, wherein Ci is a number of code blocks per transport block; setting index m as 0 to $M_1$-1; for groups

with the indices m as 0 to Mi-1, setting a group with index m to include $K_1$ code block with indices $m \cdot K_1 + k$, wherein k=0, 1, ..., $K_1$-1; for groups with indices m as $M_1$ to M-1, setting the group with index m to include $K_2$ code block with indices $M_1 \cdot K_1 + (m - M_1) \cdot K_2 + k$, wherein k=0, 1, ..., $K_2$-1.

A user equipment according to the disclosure comprises: a storage, configured to store a program; and a processor, coupled to the storage, and configured to execute the program to: receive a first configuration related to slot aggregation for PDSCH reception; receive a DCI; receive a PDSCH indicted by the DCI across a first number of aggregated slots; and transmit a codebook comprising a first information and a second information.

To make the aforementioned more comprehensible, several embodiments accompanied with drawings are described in detail as follows.

## BRIEF DESCRIPTION OF THE DRAWINGS

The accompanying drawings are illustrated to provide a further understanding of the disclosure, and are incorporated in and constitute a part of this specification. The drawings illustrate exemplary embodiments of the disclosure and, together with the description, serve to explain the principles of the disclosure.

FIG. 1 is a block diagram of a user equipment according to an embodiment of the disclosure.
FIG. 2 is a flowchart of a method for performing a hybrid automatic repeat request (HARQ) transmission according to an embodiment of the disclosure.
FIG. 3 is a schematic of scheduling PDSCH across multiple slots by one DCI according to an embodiment of the disclosure.
FIG. 4 is a schematic of HARQ transmission for slot aggregation according to an embodiment of the disclosure.
FIG. 5 is a schematic of dividing a transport block according to an embodiment of the disclosure.
FIG. 6 is a schematic of a codebook according to an embodiment of the disclosure.
FIGs. 7A and 7B are schematic of a codebook corresponding to TB-based transmission or CBG-based transmission in response to ACK-feedback according to an embodiment of the disclosure.
FIGs. 8A and 8B are schematic of a codebook corresponding to TB-based transmission in response to NACK-feedback according to an embodiment of the disclosure.
FIG. 9 is a flowchart of a method for determining the second information of the codebook according to an embodiment of the disclosure.
FIG. 10 is a flowchart of a method for determining the second information of the codebook according to another embodiment of the disclosure.
FIG. 11 is a schematic of a codebook corresponding to CBG-based transmission according to an embodiment of the disclosure.
FIG. 12 is a schematic of a codebook corresponding to CBG-based transmission according to an embodiment of the disclosure.
FIG. 13 is a schematic of an application example of a codebook in response to ACK-feedback corresponding to the transport block 510 according to an embodiment of the disclosure.
FIG. 14 is a schematic of an application example of a codebook corresponding to CBG-based transmission in response to NACK-feedback corresponding to the transport block 510 according to an embodiment of the disclosure.
FIG. 15 is a schematic of a codebook corresponding to CBG-based transmission in response to NACK-feedback corresponding to the transport block 510 according to an embodiment of the disclosure.
FIG. 16 is a schematic of a codebook corresponding to CBG-based transmission in response to NACK-feedback corresponding to the transport block 510 according to another embodiment of the disclosure.
FIG. 17 is a schematic of codebooks corresponding to two HARQ processes according to an embodiment of the disclosure.

## DESCRIPTION OF THE EMBODIMENTS

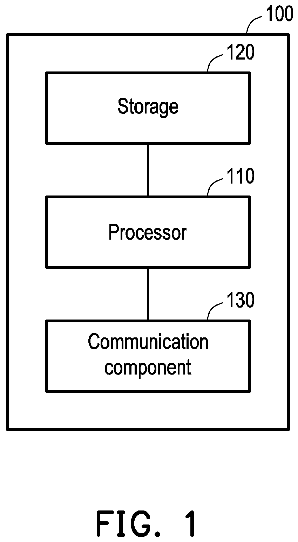

FIG. 1 is a block diagram of a user equipment according to an embodiment of the disclosure. Please refer to FIG. 1, a user equipment (UE) 100 is an electronic apparatus having an arithmetic capability. The UE 100 may be, for example, a mobile station, an advanced mobile station (AMS), a server, a client, a desktop computer, a laptop computer, a network computer, a workstation, a personal digital assistant (PDA), a tablet personal computer (PC), a scanner, a telephone device, a pager, a camera, a television, a hand-held video game device, a musical device, a wireless sensor, and the like.

The UE 100 comprises a processor 110, a storage 120 and a communication component 130. The processor 110 is coupled to the storage 120 and the communication component 130. The processor 110 is, for example, a central processing unit (CPU), a physics processing unit (PPU), a programmable microprocessor, an embedded control chip, a digital signal processor (DSP), an application specific integrated circuit (ASIC), or other similar devices.

The storage 120 is, for example, any type of fixed or removable random-access memory (RAM), read-only memory (ROM), flash memory, hard disk drive, other similar apparatuses, or a combination of the apparatuses. The storage 120 stores a plurality of code fragments, and the code fragments are executed by the processor 110 after being installed, so as to execute the method for performing a hybrid automatic repeat request (HARQ) transmission.

The communication component 130 may be a chip or circuit using a local area network (LAN) technology, a wireless LAN (WLAN) technology, or a mobile communication technology. The local area network is, for example, Ethernet. The wireless local area network is, for example, Wi-Fi. The mobile communication technology is, for example, Global System for Mobile Communications (GSM), the third generation mobile communication technology (3G), the fourth generation mobile communication technology (4G), the fifth generation mobile communication technology (5G), and so on.

The UE 100 performs uplink and downlink communications with a base station (BS) through the communication component 130. For example, the BS could be synonymous with a variation or a sub-variation of a generation node B (gNB), an evolved node B (eNB), a Node-B, an advanced BS (ABS), a transmission reception point (TRP), an unlicensed TRP, a base transceiver system (BTS), an access point, a home BS, a relay station, a scatterer, a repeater, an intermediate node, an intermediary, satellite-based communication BSs, and so forth.

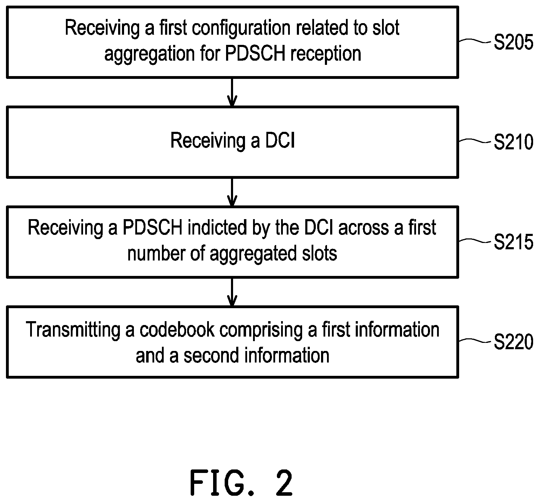

FIG. 2 is a flowchart of a method for performing a hybrid automatic repeat request (HARQ) transmission according to an embodiment of the disclosure. In the following embodiment, slot aggregation is used for data transmission. Slot aggregation is a mechanism that one downlink control information (DCI) can schedule the same transport block (TB) via physical downlink shared channel (PDSCH) across multiple slots. Instead of waiting confirmation from the UE 100, data transmission spans over multiple slots which is beneficial for improving the correctly decoding probability. For example, the BS would transmit same TB across a preconfigured number of slots (e.g. 4 consecutive slots). Same HARQ process number is used for each transmission that is part of the same bundle. Within a bundle, HARQ retransmissions are triggered without waiting for feedback from previous transmission.

Please refer to FIG. 1 and FIG. 2. First, in step S205, the processor 110 receives a first configuration related to slot aggregation for physical downlink shared channel (PDSCH) reception. Herein, the first configuration is indicated via a higher layer signaling. The higher layer signaling comprises at least one of the following signaling: a radio resource control (RRC) signaling, a medium access control (MAC) signaling, or a radio link control (RLC) signaling. In one embodiment, the higher layer signaling comprises the RRC signaling. In one embodiment, the higher layer signaling comprises the MAC signaling. In one embodiment, the higher layer signaling comprises the RLC signaling. In one embodiment, the higher layer signaling comprises the RRC signaling, the MAC signaling, and the RLC signaling. In one embodiment, the higher layer signaling comprises the RRC signaling and the MAC signaling. In one embodiment, the higher layer signaling comprises the RRC signaling, the MAC signaling, or the RLC signaling. The PDSCH comprises at least one transport block, and the transport block comprises a plurality of code blocks. In 5G NR, the transport block is the payload passed between the MAC Layer and PHY Layer. In one embodiment, the transport block may include million bits and the code block may include 8448 bits.

Next, in step S210, the processor 110 receives a downlink control information (DCI). For example, the DCI is sent from the BS to the UE 100, and carried by the physical downlink control channel (PDCCH). The DCI is a set of information which schedules PDSCH or physical uplink shared channel (PUSCH). The DCI provides the UE 100 with the necessary information such as physical layer resource allocation, power control commands, HARQ information, etc.

In one embodiment, the DCI may provide a parameter $k_i$ for PDSCH to HARQ feedback. In 5G NR, if the UE 100 is configured to monitor PDCCH for DCI format 1_0, the parameter $k_i$ is provided by a set of slot timing values {1, 2, 3, 4, 5, 6, 7, 8}. If the UE 100 is configured to monitor PDCCH for DCI format 1_1, the parameter $k_i$ is provided by dl-DataToUL-ACK. If the UE 100 is configured to monitor PDCCH for DCI format 1_2, the parameter $k_i$ is provided by dl-DataToUL-ACK-ForDCIFormat1_2. If the UE 100 is configured to monitor PDCCH for DCI format 1_1 and DCI format 1_2, the parameter $k_i$ is provided by the union of dl-DataToUL-ACK and dl-DataToUL-ACK-ForDCIFormat1_2.

In step S215, the processor 110 receives a PDSCH indicted by the DCI across a first number of aggregated slots. The first number of aggregated slots is determined according to the first configuration. In one embodiment, the first configuration comprises the parameter "pdsch-AggregationFactor" signaled via higher layer signaling. In one embodiment, the higher layer signaling is a RRC signaling. The first number of aggregated slots is determined by the parameter "pdsch-AggregationFactor". In one embodiment, the first number of the aggregated slots can be 1 or 2 or 4 or 8 slots. When the UE 100 is configured with pdsch-AggregationFactor > 1, the same symbol allocation is applied across the pdsch-AggregationFactor slots.

Specifically, if the DCI indicates that the PDSCH comprises a newly transmitted transport block, the first number of aggregated slots is determined according to the first configuration (e.g. parameter "pdsch-AggregationFactor"). That is, the first number of aggregated slots determined by the first configuration is used for the initial transmission. In one embodiment, if the DCI indicates that the PDSCH comprises a retransmitted transport block, a second number of aggregated slots is determined according to the first configuration (e.g. parameter "pdsch-AggregationFactor"). That is, the second number of aggregated slots determined by the first configuration (e.g. parameter "pdsch-AggregationFactor") is used for the retransmission.

In another embodiment, if the DCI indicates that the PDSCH comprises a retransmitted transport block, the second number of aggregated slots is determined according to the DCI. That is, the second number of aggregated slots determined by the DCI is used for the retransmission.

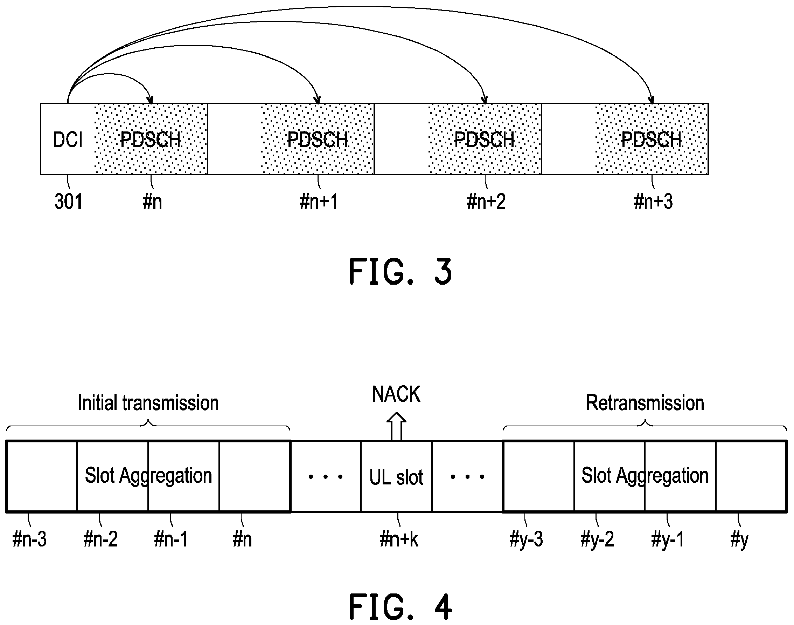

FIG. 3 is a schematic of scheduling PDSCH across multiple slots by one DCI according to an embodiment of the disclosure. Please refer to FIG. 3, in the embodiment, it is assumed that DCI 301 indicates that the PDSCH across pdsch-AggregationFactor slots wherein pdsch-AggregationFactor is 4. Accordingly, the DCI 301 schedules PDSCH across 4 slots, e.g. slot #n to slot #n+3. The BS would transmit the same transport block across 4 slots (e.g. slot #n to slot #n+3).

FIG. 4 is a schematic of HARQ transmission for slot aggregation according to an embodiment of the disclosure. Please refer to FIG. 4, in the embodiment, both the number of aggregated slots for initial transmission (e.g. the first number of aggregated slots) and the number of aggregated slots for retransmission (e.g., the second number of aggregated slots) are determined by the first configuration (e.g. pdsch-AggregationFactor is 4). That is, slot #n to slot #n+3 are used for initial transmission, and slot #y-3 to slot #y are used for retransmission. In the initial transmission, the UE 100 received the same PDSCH across 4 slots (slot #n-3 to slot #n). In response to decoding failure, the feedback corresponding to the PDSCH is a NACK which is transmitted in slot #n+k, so the BS will retransmit the same PDSCH across 4 slots (slot #y-3 to slot #y ) to the UE 100 for decoding again.

In another embodiment, the number of aggregated slots for initial transmission may be determined by the first configuration, and the number of aggregated slots for retransmission may be determined by the DCI.

In NR, for improving the transmission efficiency and radio resource utilization, the UE 100 may further receive a second configuration related to code block groups (CBGs) for the PDSCH reception. The CBGs are grouped from a plurality of code blocks (CBs) comprised in a transport block (TB) of the PDSCH. Specifically, the transport block is divided into multiple code blocks, and multiple CBs may be further grouped into one or more code block groups (CBGs).

For example, the second configuration related to CBGs comprises a parameter "maxCodeBlockGroupsPer-TransportBlock" provided by a higher layer signaling (e.g. RRC signaling) and used for indicating the maximum number of CBGs per TB (e.g. $N_{maxCBG}$ ).

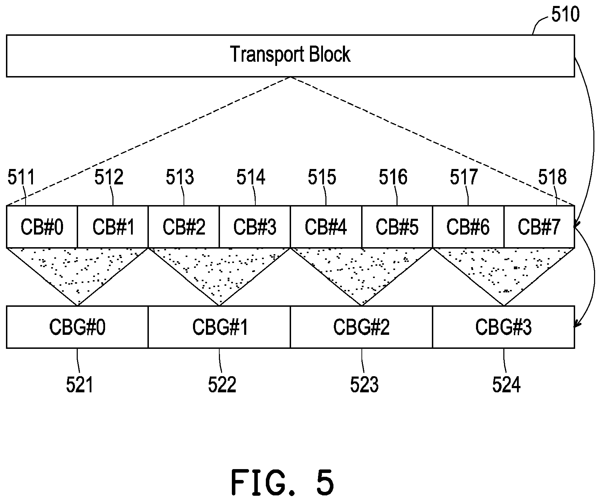

FIG. 5 is a schematic of dividing a transport block according to an embodiment of the disclosure. Please refer to FIG. 5. The transport block 510 is divided into 8 CBs 511 to 518 (respectively numbered as CB#0 to CB#7). In the embodiment, it is assumed that the maximum number of CBGs per TB ($N_{maxCBG}$) is set to 4, the CBs 511 to 518 are grouped into 4 CBGs, i.e. CBGs 521 to 524 (respectively numbered as CBG#0 to CBG#3). The CBs 511 and 512 are grouped to the CBG 521, the CBs 513 and 514 are grouped to the CBG 522, the CBs 515 and 516 are grouped to the CBG 523, and the CBs 517 and 518 are grouped to the CBG 524. That is, every two CBs are grouped into one CBG.

In step S220, the processor 110 transmits a codebook comprising a first information and a second information. In the embodiment, the codebook provides the feedback corresponding to the PDSCH to the BS. The UE 100 transmits the decoding result (e.g ACK or NACK) of the PDSCH to the BS. 3GPP includes two types of codebooks, i.e. Type-1 codebook and Type-2 codebook. Specifically, Type-1 codebook is a codebook with a size provided by higher layer signaling (i.e. the size of the Type-1 codebook is semi-static). Type-2 codebook is a codebook with a size provided by the DCI corresponding to the PDSCH reception (i.e. the size of the Type-2 codebook is dynamic).

In the embodiment, the Type-1 codebook is used for description. In an embodiment of the disclosure, if the UE is configured with TB-based transmission, the size of the codebook (i.e. Type-1 codebook) is related to a first value wherein the first value is related to the number of occasions for candidate PDSCH receptions.

In the embodiment, the Type-1 codebook is used for description. In an embodiment of the disclosure, if the UE is configured with CBG-based transmission, the size of the codebook (i.e. Type-1 codebook) is related to a first value and a second value. The first value is related to the number of occasions for candidate PDSCH receptions. The second value is related to one of followings: a maximum number of CGBs per TB, a fixed value, a pre-determined value, a preconfigured value, or a configurable value.

In one embodiment, the first information of the codebook comprises an ACK or a NACK associated with a HARQ process for the PDSCH. The second information of the codebook comprises at least one of the following parameters: information related to battery life, information related to signal to noise plus interference ratio (SINR), information related to modulation and coding scheme (MCS), information related to channel quality indication (CQI), information related to quasi co-location (QCL) assumption, or information related to transmission power. In one embodiment, the second information of the codebook comprises the information related to battery life. In one embodiment, the second information of the codebook comprises the information related to SINR In one embodiment, the second information of the codebook comprises the information related to MCS. In one embodiment, the second information of the codebook comprises the information related to CQI. In one embodiment, the second information of the codebook comprises the information related to CQI. In one embodiment, the second information of the codebook comprises the information related to QCL assumption. In one embodiment, the second information of the codebook comprises the information related to transmission power. In another embodiment, the second information of the codebook comprises the information related battery life, SINR , and MCS. In one embodiment, the second information of the codebook comprises the information related to battery life, information related to signal to SINR, information related to MCS, information related to CQI, information related to QCL assumption, and information related to transmission power. In one embodiment, the second information of the codebook comprises the information related to battery life, information related to signal to SINR, information related to MCS, information related to CQI, information related to QCL assumption, or information related to transmission power.

The information related to SINR is determined according to at least one of following radio resources: the PDSCH reception, a reference signal of a serving cell, or a reference signal of neighbor cell. In one embodiment, the information related to SINR is determined according to the PDSCH reception. In another embodiment, the information related to SINR is determined according to the reference signal of a serving cell. In one embodiment, the information related to SINR is determined according to the reference signal of neighbor cell. In one embodiment, the information related to SINR is determined according to the PDSCH reception and the reference signal of neighbor cell. In one embodiment, the information related to SINR is determined according to the PDSCH reception, a reference signal of a serving cell, and a reference signal of neighbor cell. In one embodiment, the information related to SINR is determined according to the PDSCH reception, a reference signal of a serving cell, or a reference signal of neighbor cell.

The information related to CQI is determined according to at least one of following radio resources: the PDSCH reception, a reference signal of a serving cell, or a reference signal of neighbor cell. In one embodiment, the information related to CQI is determined according to the reference signal of the serving cell. In another embodiment, the information related to CQI is determined according to the PDSCH reception. In one embodiment, the information related to CQI is determined according to the reference signal of neighbor cell. In one embodiment, the information related to CQI is determined according to the PDSCH reception and a reference signal of neighbor cell. In one embodiment, the information related to CQI is the PDSCH reception, the reference signal of the serving cell, and the reference signal of the neighbor cell. In one embodiment, the information related to CQI is the PDSCH reception, the reference signal of the serving cell, or the reference signal of the neighbor cell.

The information related to QCL assumption is determined according to at least one of following radio resources: the PDSCH reception, a reference signal of a serving cell, or a reference signal of neighbor cell. In one embodiment, the information related to QCL assumption is determined according to the reference signal of neighbor cell. In one embodiment, the information related to QCL assumption is determined according to the reference signal of the serving cell. In another embodiment, the information related to QCL assumption is determined according to the PDSCH reception. In one embodiment, the information related to QCL assumption is determined according to the PDSCH reception and a reference signal of neighbor cell. In one embodiment, the information related to QCL assumption is determined according to the PDSCH reception, the reference signal of the serving cell, and a reference signal of neighbor cell. In one embodiment, the information related to QCL assumption is determined according to the PDSCH reception, the reference signal of the serving cell, or a reference signal of neighbor cell.

The information related to transmission power is determined according to at least one of following radio resources: the PDSCH reception, a reference signal of a serving cell, or a reference signal of neighbor cell. In one embodiment, the information related to transmission power is determined according to the PDSCH reception. In another embodiment, the information related to transmission power is determined according to the reference signal of the serving cell. In one embodiment, the information related to transmission power is determined according to the reference signal of the neighbor cell. In one embodiment, the information related to transmission power is determined according to the PDSCH reception, and the reference signal of the neighbor cell. In one embodiment, the information related to transmission power is determined according to the PDSCH reception, the reference signal of the serving cell, and the reference signal of the neighbor cell. In one embodiment, the information related to transmission power is determined according to the PDSCH reception, the reference signal of the serving cell, or the reference signal of the neighbor cell.

The above mentioned reference signal comprising SSB (synchronization signal block), CSI-RS (channel status information reference signal), SRS (sounding reference signal), etc.

The number of available bits for carrying the second information is determined according to a size of the codebook and a size of the first information. The second information carried in the codebook is determined with a priority order. Furthermore, the second information carried in the codebook is determined according to the number of available bits in the codebook and/or the priority order. In one embodiment, the priority order is predetermined or default. In another embodiment, the priority order is determined according to at least one of following parameters: symbol number, slot number, sub-frame number, frame number, serving cell identifier, or bandwidth part identifier. In one embodiment, the priority order is determined according to symbol number. In one embodiment, the priority order is determined according to slot number. In one embodiment, the priority order is determined according to sub-frame number. In one embodiment, the priority order is determined according to frame number. In one embodiment, the priority order is determined according to serving cell identifier. In one embodiment, the priority order is determined according to bandwidth part identifier. In one embodiment, the priority order is determined according to symbol number and slot number. In one embodiment, the priority order is determined according to symbol number, slot number, sub-frame number, frame number, serving cell identifier, and bandwidth part identifier. In one embodiment, the priority order is determined according to symbol number, slot number, sub-frame number, frame number, serving cell identifier, or bandwidth part identifier.

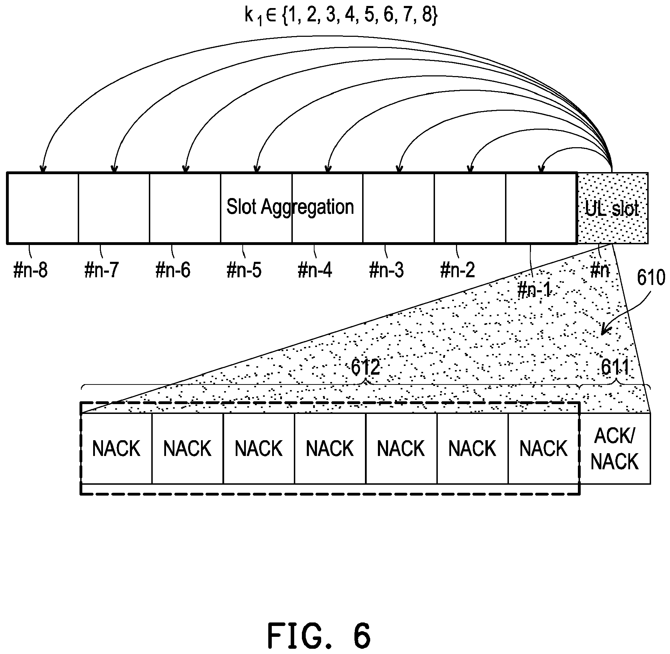

FIG. 6 is a schematic of a codebook according to an embodiment of the disclosure. Please refer to FIG. 6, in the embodiment, the parameter ki is provided by a set of slot timing values {1, 2, 3, 4, 5, 6, 7, 8}. Hence, the number of occasions for candidate PDSCH receptions is 8, obtaining by the set of slot timing values. The size of the codebook is determined by a first value wherein the first value is related to the number of occasions for candidate PDSCH receptions is 8. In the embodiment, the UE is configured with slot aggregation and the first number of aggregated slot is 8, and the same PDSCH is transmitted across slot #n-8~#n-1. The first information 611 comprises the decoding result (e.g. ACK or NACK) for the PDSCH reception only in slot #n-1. In another system, the second information 612 comprises 'NACK' for each corresponding decoding result for the PDSCH reception in slot #n-8-slot #n-2. However, if slot #n-8-slot #n-2 are filled with other information, the resource utilization may be increased.

In FIG. 6, the codebook 610 comprises the first information 611 and the second information 612. The first information 611 is, for example, the ACK or the NACK associated with the HARQ process for the PDSCH reception in the last DL slots. In the embodiment, the number of available bits for carrying the second information 612 is determined according to the size of the codebook 610 and the size of the first information 611. In the embodiment shown in FIG 6, the size of the codebook 610 is 8 bits and the size of the first information 611 is one bit. Accordingly, the number of available bits for carrying the second information 612 is 7 bits. 7 bits of the second information 612 are filled with NACK. Accordingly, in the embodiment, valid parameter can be used instead of NACK to increase the resource utilization.

In the embodiment, the priority order is adapted to determine the second information in the codebook. Specifically, at least one parameter is carried in the second information which is determined by the priority order. For example, the priority order of the parameters used in the second information is shown in Table 1 if the PDSCH is correctly decoded.

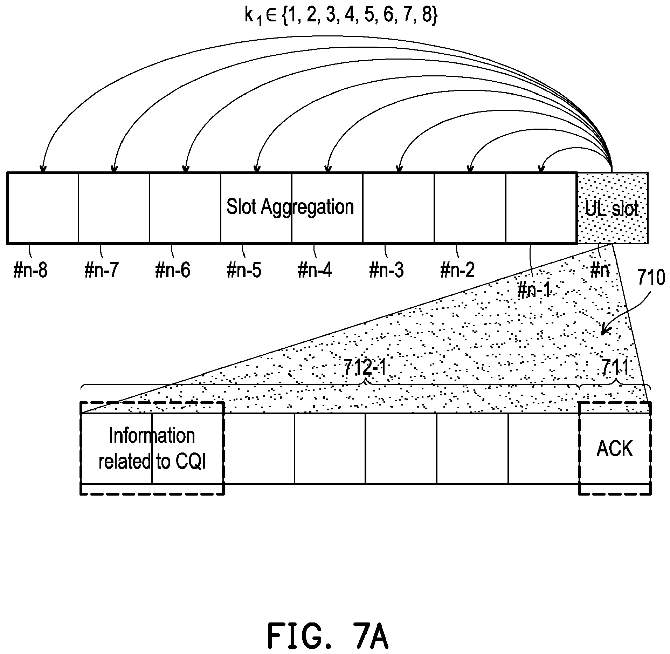

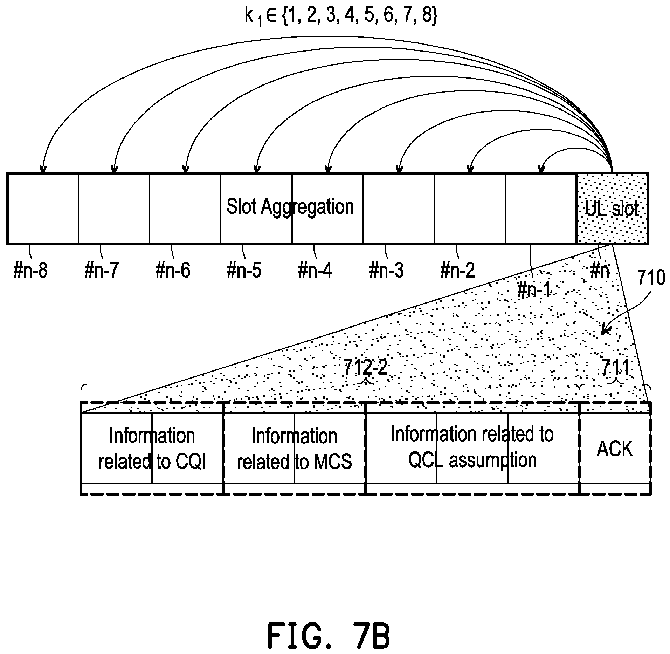

FIGs. 7A and 7B are schematic of a codebook corresponding to TB-based transmission or CBG-based transmission in response to ACK-feedback according to an embodiment of the disclosure. In FIGs. 7A and 7B, the UE 100 decodes the transport block successfully, so the first information 711 carried on the codebook 710 is ACK (e.g. 1 bit in the codebook 710 is filled). In the embodiment, the second information 712-1 or 712-2 carried in the codebook 710 is determined with the priority order. For example, the priority order of the parameters used in the second information 712-1 or 712-2 is shown in Table 1.

Table 1

| priority order | parameters | size |
|---|---|---|
| 1 | information related to CQI | 2 bits |
| 2 | information related to MCS | 2 bits |
| 3 | information related to QCL assumption | 3 bits |
| 4 | information related to battery life | 2 bits |
| 5 | information related to SINR | 4 bits |
| 6 | information related to transmission power | 2 bits |

In FIG. 7A, the first information 711 corresponding to the PDSCH reception in slot #n-1 is an ACK (i.e. the PDSCH is correctly received), and the second information 712-1 comprises the information related to CQI (CQI with the highest priority order in Table 1). In FIG. 7B, the first information 711 corresponding to the PDSCH reception in slot #n-1 is an ACK (i.e. the PDSCH is correctly received), and the second information 712-2 comprises the information related to CQI (CQI with the highest priority order in Table 1), the information related to MCS (i.e. MCS with the second priority order in Table 1), and the information related to QCL assumption (i.e. MCS with the third priority order in Table 1). Instead of filling with NACKs, the second information 712-1 or 712-2 comprises at least one parameter is beneficial for resource utilization.

In the embodiment, the priority order is adapted to determine the second information in the codebook. Specifically, at least one parameter is carried in the second information which is determined with the priority order. For example, the priority order of the parameters used in the second information is shown in Table 2 if the PDSCH is not correctly decoded.

Table 2

| priority order | parameters | size |
|---|---|---|
| 1 | Number of aggregated slots for retransmission | 2 bits |
| 2 | information related to CQI | 2 bits |
| 3 | information related to MCS | 2 bits |
| 4 | information related to QCL assumption | 3 bits |
| 5 | information related to battery life | 2 bits |
| 6 | information related to SINR | 4 bits |
| 7 | information related to transmission power | 2 bits |

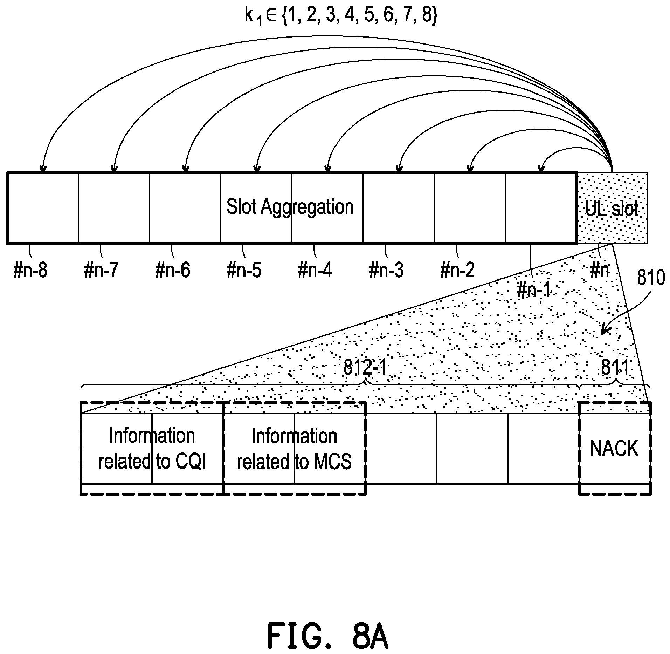

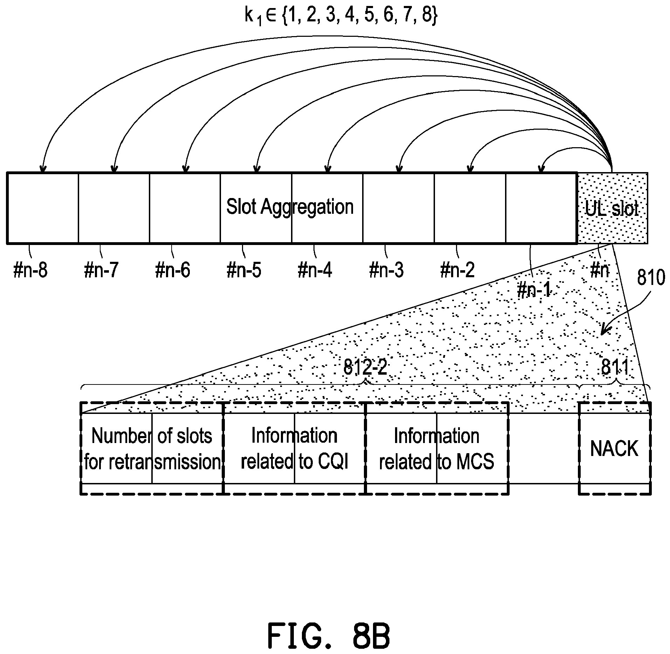

FIGs. 8A and 8B are schematic of a codebook corresponding to TB-based transmission in response to NACK-feedback according to an embodiment of the disclosure. In FIG. 8A, in the codebook 810, the first information 811 corresponding to the PDSCH reception in slot #n-1 is a NACK (i.e. the PDSCH is not correctly received), and the second information 812-1 comprises the information related to CQI (1st priority in Table 1) and the information related to MCS (2nd priority in Table 1). In Fig. 8B, the first information 811 corresponding to the PDSCH reception in slot #n-1 is a NACK (i.e. the PDSCH is not correctly received), and the second information 812-2 comprises a number of aggregated slots for retransmission (1st priority in Table 2), the information related to CQI (2nd priority in Table 2), and the information related to MCS (3rd priority in Table 2). Instead of filling with NACKs, the second information 812-1 or 812-2 comprises at least one parameter is beneficial for resource utilization.

In another embodiment, priority order can be set depending on at least one of the following parameters: a slot number, symbol number, sub-frame number, frame number, serving cell identifier, or bandwidth part identifier. For example, priority order can be set depending on the slot number. For example, priority order can be set depending on the symbol number. For example, priority order can be set depending on the sub-frame number. For example, priority order can be set depending on the frame number. For example, priority order can be set depending on the serving cell identifier. For example, priority order can be set depending on the bandwidth part identifier. For example, priority order can be set depending on the symbol number and the frame number. For example, priority order can be set depending on the slot number, the symbol number, the sub-frame number, the frame number, the serving cell identifier, and the bandwidth part identifier. For example, priority order can be set depending on the slot number, the symbol number, the sub-frame number, the frame number, the serving cell identifier, or the bandwidth part identifier. For example, Table 2 is used for the second information if the codebook is transmitted in a slot with an even number (e.g. #0, #2, #4, #6, #8). If the codebook is transmitted in a slot with an odd number (e.g. #1, #3, #5, #7, #9), Table 3 is used for the second information.

Table 3

| priority order | parameters | size |
|---|---|---|
| 1 | Number of aggregated slots for retransmission | 2 bits |
| 2 | information related to transmission power | 2 bits |
| 3 | information related to QCL assumption | 3 bits |
| 4 | information related to CQI | 2 bits |
| 5 | information related to MCS | 2 bits |
| 6 | information related to battery life | 2 bits |
| 7 | information related to SINR | 4 bits |

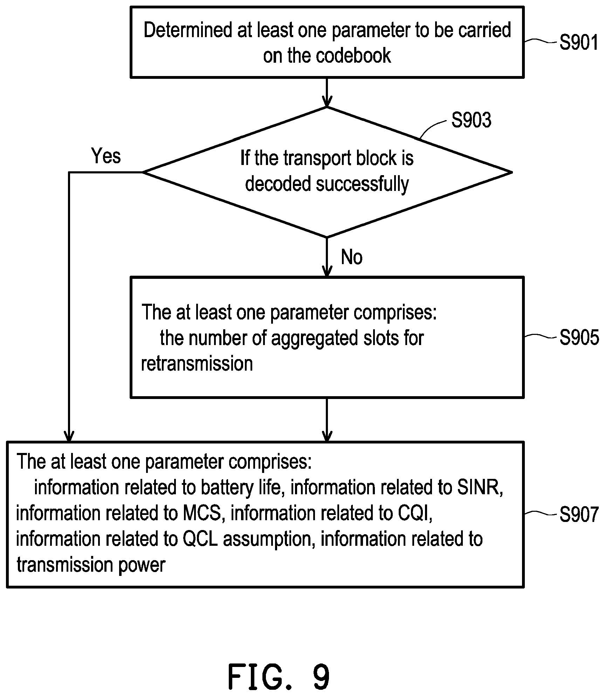

FIG. 9 is a flowchart of a method for determining the second information of the codebook according to an embodiment of the disclosure. Please refer to Fig. 9, in step S901, the processor 110 determined at least one parameter to be carried on the codebook. Next, in step S903, the processor 110 determines whether the transport block is decoded successfully. If the transport block is decoded successfully, in step S907, the parameters used in the second information comprises at least one of the following parameter: information related to battery life, information related to SINR, information related to MCS, information related to CQI, information related to QCL assumption, or information related to transmission power, and the priority order of the parameters is as shown in Table 1. In FIGs. 7A and 7B, in response to the transport block being successfully decoded, the first information 711 carried on the codebook 710 is ACK, and the second information 712 comprises information related to CQI, information related to MCS, and information related to QCL assumption based on the priority order shown in Table 1.

If the transport block is not decoded successfully, in step S905, the parameters used in the second information comprises at least one of the following parameters: the number of aggregated slots for its retransmission. Moreover, in step S907, the parameters used in the second information further comprises at least one of the parameters: information related to battery life, information related to SINR, information related to MCS, information related to CQI, information related to QCL assumption, or information related to transmission power. In response to the transport block decoding failure, the parameters and the priority order of the parameters used in the second information are is shown in Table 2 or Table 3. In terms of FIG. 8B, in response to the transport block decoding failure, the first information 811 carried on the codebook 810 is NACK, and the second information 812-2 comprises a number of aggregated slots for retransmission, the information related to CQI, and the information related to MCS.

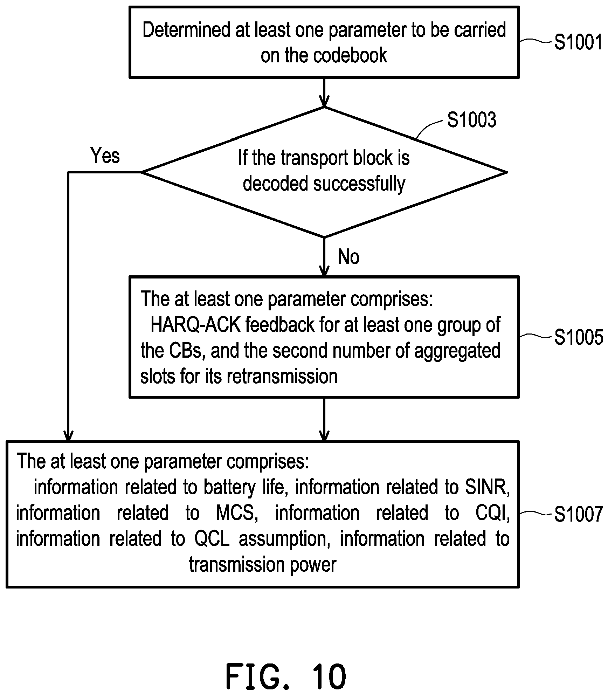

FIG. 10 is a flowchart of a method for determining the second information of the codebook according to another embodiment of the disclosure. In the embodiment, steps S1001, S1003 and S1007 are similar to steps S901, S903 and S907 respectively. Please refer to Fig. 10, in step S1001, the processor 110 determined at least one parameter to be carried on the codebook. Next, in step S1003, the processor 110 determines whether the transport block is decoded successfully. If the transport block is decoded successfully, in step S1007, the parameters used in the second information comprises at least one of the following parameter: information related to battery life, information related to SINR, information related to MCS, information related to CQI, information related to QCL assumption, or information related to transmission power, and the priority order of the parameters is as shown in Table 1.

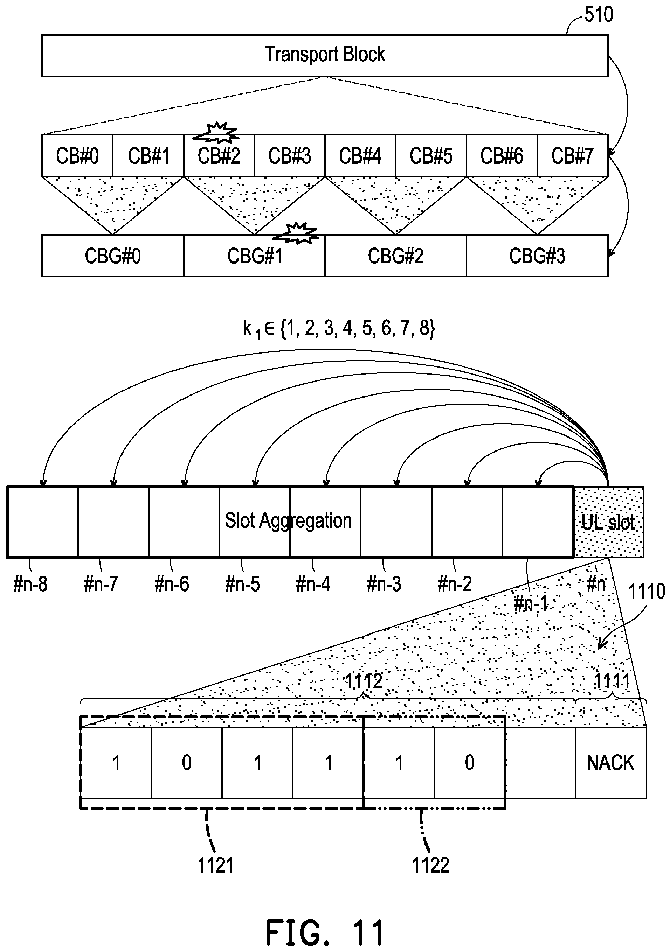

If the transport block is not decoded successfully, in step S1005, the parameters used in the second information comprises HARQ-ACK feedback for at least one group of the CBs, and the number of aggregated slots for its retransmission. Moreover, the parameters used in the second information further comprises at least one of the parameters as shown in step S1007. Next, step S1007 is described using FIG. 11.

FIG. 11 is a schematic of a codebook corresponding to CBG-based transmission according to an embodiment of the disclosure. Take the transport block 510 in FIG. 5 as an example. In the embodiment, the UE 100 does not correctly decode the transport block 510 (e.g. CB#2 or CBG#1 is not correctly decoded), and the UE 100 is configured with CBG-based transmission. The size of the codebooks is related to a first value and a second value wherein the first value is related to the number of occasions for candidate PDSCH receptions and the second value is related to one of followings: a maximum number of code block groups per transport block, a fixed value, a pre-determined value, a preconfigured value, or a configurable value. In FIG. 11, the first value is 8 and the second value is 1; hence, the size of the codebook 1110 is 8 bits. The maximum number of CBGs per TB ($N_{maxCBG}$) is set to 4. The transport block 510 includes 8 CBs (respectively numbered as CB#0 to CB#7), and the 8 CBs are grouped into 4 CBGs (respectively numbered as CBG#0 to CBG#3).

In FIG. 11, the first information 1111 carried on the codebook 1110 is a NACK (a NACK for the TB or at least one NACK of the CBGs). In one embodiment, in response to the first information 1111 comprises the NACK, the second information 1112 may further comprise HARQ-ACK feedback for the CBGs (or HARQ-ACK feedback for a group of CBs) of the PDSCH and the number of aggregated slots for retransmission (e.g., the second number of aggregated slots). In another embodiment, in response to the first information 1111 comprises the NACK, the second information 1112 may further comprise HARQ-ACK feedback for the CBGs (or HARQ-ACK feedback for a group of CBs) of the PDSCH.

In Fig. 11, the UE is configured with CBG-based transmission and the TB is not correctly decoding, determination of the second information 1112 is obtained by the priority order shown in Table 4. Herein, a storage space 1121 is configured in the codebook 1110 based on the maximum number of CBGs per TB ($N_{maxCBG}$), and a storage space 1122 is configured in the codebook 1110 for the number of aggregated slots for retransmission (e.g., the second number of aggregated slots).

Table 4

| priority order | parameters | Size |
|---|---|---|
| 1 | ACK/NACK feedback per CBG | 4 bitsi |
| 2 | Number of aggregated slots for retransmission | 2 bits |
| 3 | information related to CQI | 2 bits |
| 4 | information related to MCS | 2 bits |
| 5 | information related to QCL assumption | 3 bits |
| 6 | information related to battery life | 2 bits |

(continued)

| priority order | parameters | Size |
|---|---|---|
| 7 | information related to SINR | 4 bits |
| 8 | information related to transmission power | 2 bits |

For example, there are 4 CBGs, and 4 bits are configured for the storage space 1121. The first bit corresponds to CBG#0, the second bit corresponds to CBG#1, the third bit corresponds to CBG#3, and the fourth bit corresponds to CBG#3. It is assumed that CB#2 is not correctly decoded. That means that CBG#1 is not correctly decoded. Accordingly, {1, 0, 1, 1} is filled to the storage space 1121, wherein "1" corresponds to decoding success, and "0" corresponds to decoding failure.

For example, the DCI further provides binary representation for different number of aggregated slots. As shown in Table 5, the binary representation of 1 aggregated slot is "00", the binary representation of 2 aggregated slots is "01", the binary representation of 4 aggregated slots is "10", and the binary representation of 8 aggregated slots is "11". In the embodiment, it is assumed that the second number of aggregated slots is 4. Referring to Table 5, it can be known that and the binary representation is "10", and "10" is filled to the storage space 1122.

Table 5

| binary representation | the number of aggregated slot(s) for retransmission (e.g. the second number of aggregated slot(s)) |
|---|---|
| 00 | 1 |
| 01 | 2 |
| 10 | 4 |
| 11 | 8 |

In another embodiment, in response to the first information 1111 comprises the NACK, the number of aggregated slots for retransmission is filled in the codebook 1110 as the second information 1112. For example, referring to Table 5, it is assumed that the second number is 4, the binary representation "10" is filled into the storage space 1122.

In the embodiment of FIG. 11, the number of remaining bits after deducting the number of bits used by the first information 1111 (e.g. the number of available bits for carrying the second information 1112) is larger than the maximum number of CBGs per TB (herein, $N_{maxCBG}$ is 4), the UE 100 uses 4 bits of the storage space 1121 for carrying ACK/NACK information per CBG. In another embodiment, if the number of remaining bits is less than the maximum number of CBGs per TB, the UE 100 may combine ACK/NACK information for a plurality of CBs.

Specifically, the UE 100 groups the CBs by the processor 110 according to the maximum number of CBGs and a number of available bits for carrying the second information 1112. For example, the processor 110 calculates M=min(N, C), wherein N is the maximum number of CBGs per transport block, and C is the number of available bits for carrying the second information 1112.

Next, the grouping of the CBs is obtained based on following. The processor 110 calculates $M_1 = mod(C_1, M)$,

$$K_1 = \left\lceil \frac{C_1}{M} \right\rceil, \text{ and } K_2 = \left\lfloor \frac{C_1}{M} \right\rfloor,$$ wherein $C_1$ is the number of CBs per transport block. And the processor 110 sets index m as 0 to Mi-1. For groups with the indices m as 0 to $M_1$-1, the processor 110 sets a group with index m to include $K_1$ CB(s) with indices $m \cdot K_1 + k$, wherein k=0, 1, ..., Ki-1. For groups with indices m as $M_1$ to M-1, the processor 110 sets the group with index m to include $K_2$ CB(s) with indices $M_1 \cdot K_1 + (m-M_1) \cdot K_2 + k$, wherein k=0, 1, ..., $K_2$-1.

CASE A: it is assumed that N (the maximum number of CBGs per transport block) is 4, C (the number of available bits for carrying the second information) is 8, Ci (the number of CBs per transport block) is 22.

M=min(N, C)=min(4, 8)=4;
$M_1$=mod($C_1$, M)=mod(22, 4)=2;

$$K_1 = \left\lceil \frac{C_1}{M} \right\rceil = \left\lceil \frac{22}{4} \right\rceil = 6;$$

$$K_2 = \left\lfloor \frac{C_1}{M} \right\rfloor = \left\lfloor \frac{22}{4} \right\rfloor = 5.$$

For groups with the indices m as 0 to Mi-1 (e.g. group 0 to group 1), the group with index m includes $K_1$ (which is 6) CBs with indices $m \cdot K_1 + k$, wherein k=0, 1, ..., $K_1$-1 (which is 5). That is, the group 0 includes 6 CBs with indices 0, 1, 2, 3, 4, 5. The group 1 includes 6 CBs with indices 6, 7, 8, 9, 10, 11.

For groups with the indices m as Mi to M-1 (e.g. group 2 to group 3), the group with index m includes $K_2$ (which is 5) CBs with indices $M_1 \cdot K_1 + (m-M_1) \cdot K_2 + k$, wherein k=0, 1, ..., $K_2$-1 (which is 4). That is, the group 2 includes 5 CBs with indices 12, 13, 14, 15, 16. The group 3 includes 5 CBs with indices 17, 18, 19, 20, 21.

CASE B: it is assumed that N (the maximum number of CBGs per transport block) is 4, C (the number of available bits for carrying the second information) is 2, Ci (the number of CBs per transport block) is 22.

M=min(N, C)=min(4, 2)=2;
$M_1$=mod($C_1$, M)=mod(22, 2)=0;

$$K_1 = \left\lceil \frac{C_1}{M} \right\rceil = \left\lceil \frac{22}{2} \right\rceil = 11;$$

$$K_2 = \left\lfloor \frac{C_1}{M} \right\rfloor = \left\lfloor \frac{22}{2} \right\rfloor = 11.$$

For groups with the indices m as 0 to $M_1$-1, since $M_1$=0, Mi-1=-1, negative index is unreasonable. Accordingly, the case of "the groups with the indices m as 0 to $M_1$-1" is not considered.

For groups with the indices m as $M_1$ to M-1 (e.g. group 0 to group 1), the group with index m includes $K_2$ (which is 11) CBs with indices $M_1 \cdot K_1 + (m-M_1) \cdot K_2 + k$,, wherein k=0, 1, ..., $K_2$-1 (which is 10). That is, the group 0 includes 11 CBs with indices 0, 1, 2, 3, 4, 5, 6, 7, 8, 9, 10. The group 1 includes 11 CBs with indices 11, 12, 13, 14, 15, 16, 17, 18, 19, 20, 21.

CASE C: it is assumed that N (the maximum number of CBGs per transport block) is 4, C (the number of available bits for carrying the second information) is 4, Ci (the number of CBs per transport block) is 20.

M=min(N, C)=min(4, 4)=4;
$M_1$=mod($C_1$, M)=mod(20, 4)=0;

$$K_1 = \left\lceil \frac{C_1}{M} \right\rceil = \left\lceil \frac{20}{4} \right\rceil = 5;$$

$$K_2 = \left\lfloor \frac{C_1}{M} \right\rfloor = \left\lfloor \frac{20}{4} \right\rfloor = 5.$$

For groups with the indices m as 0 to $M_1$-1, since $M_1$=0, Mi-1=-1, negative index is unreasonable. Accordingly, the case of "the groups with the indices m as 0 to $M_1$-1" is not considered.

For groups with the indices m as $M_1$ to M-1 (e.g. group 0 to group 4), the group with index m includes $K_2$ (which is 5) CBs with indices $M_1 \cdot K_1 + (m-M_1) \cdot K_2 + k$,, wherein k=0, 1, ..., $K_2$-1 (which is 4). That is, the group 0 includes 5 CBs with indices 0, 1, 2, 3, 4. The group 1 includes 5 CBs with indices 5, 6, 7, 8, 9. The group 2 includes 5 CBs with indices 10, 11, 12, 13, 14. The group 3 includes 5 CBs with indices 15, 16, 17, 18, 19.

For different cases, the number of filler bits may be different. FIGs 10 and 11 will be described below.

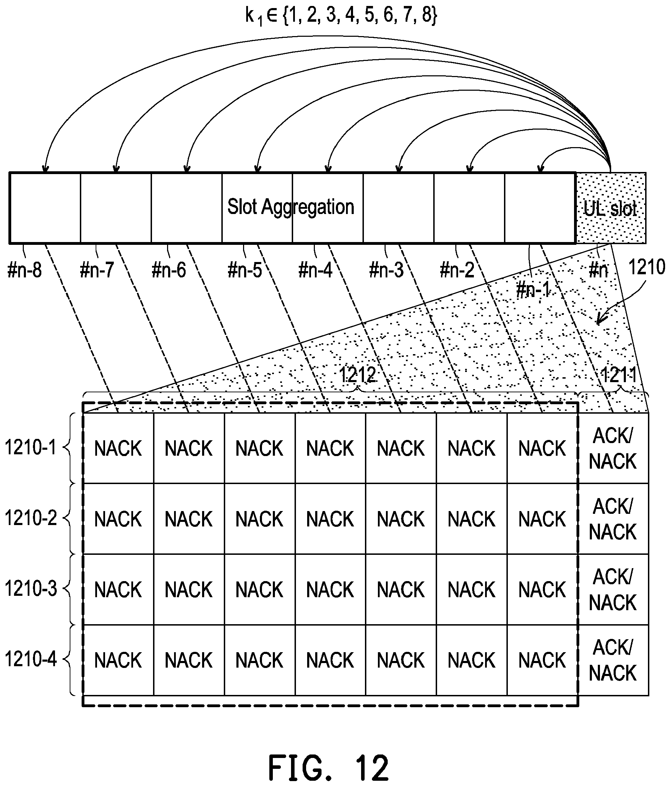

FIG. 12 is a schematic of a codebook corresponding to CBG-based transmission according to an embodiment of the disclosure. Please refer to FIG. 12, in the embodiment, the parameter ki is provided by a set of slot timing values {1, 2, 3, 4, 5, 6, 7, 8}. In another system, the size of the codebook 1210 is 8×4=32 bits (i.e., the number of occasions for candidate PDSCH receptions=8×the maximum number of CBGs per TB ($N_{maxCBG}$=4). In the embodiment, the UE 100 is configured with slot aggregation and the first number of aggregated slot is 8, and the same PDSCH is transmitted across slot #n-8~#n-1. The area 1210-1 is configured for CBG#0, the area 1210-2 is configured for CBG#1, the area 1210-3 is configured for CBG#2, and the area 1210-4 is configured for CBG#3. The first information 1211 comprises the decoding result (e.g. ACK or NACK) per CBG for the PDSCH reception only in slot #n-1. In another system, the second information 1212 comprises 'NACK' for each corresponding decoding result for the PDSCH reception in slot #n-8-slot #n-2. However, if other information is filled, the resource utilization may be improved. Especially, the size of the codebook 1210 can be large if the UE 100 is configured with CBG-based transmission. As shown in FIG. 12, the size of the codebook 1210 is 32, the size of the first information 1211 is 4, and the size of the second information 1212 is 28. The first information 1211 comprises decoding result per CBG, and the second information 1212 comprises 28 NACKs.

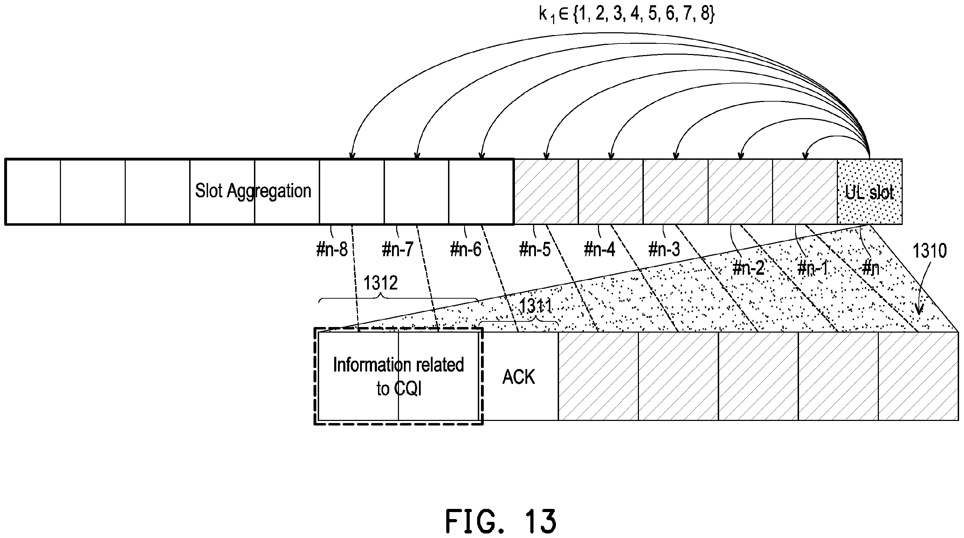

FIG. 13 is a schematic of an application example of a codebook in response to ACK-feedback corresponding to the transport block 510 according to an embodiment of the disclosure. In one of the embodiments, the UE 100 can be configured with TB-based transmission or CBG-based transmission. Please refer to FIG. 13, a number of available bits for carrying the first information 1311 and the second information 1312 in the codebook 1310 are 3 bits. The number of filler bits for carrying the second information is 2 bits in the codebook 1310. In the embodiment, the transport block 510 is correctly decoded, an ACK for the transport block 510 is carried in the codebook 1310 as the first information 1311. Based on the priority order shown in Table 1, the information related to the information related to CQI with 2 bits is carried in the codebook 1310.

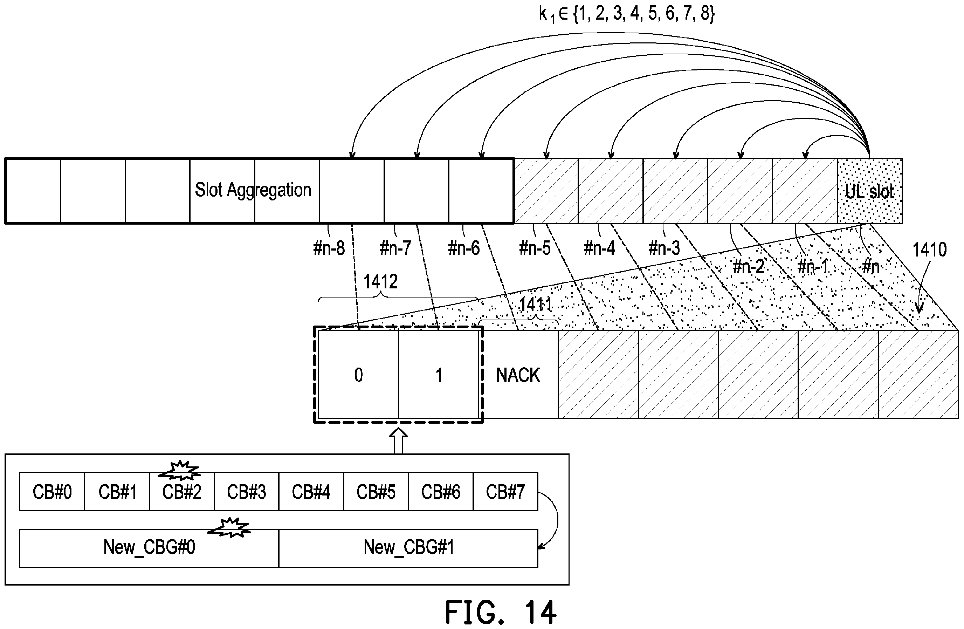

FIG. 14 is a schematic of an application example of a codebook corresponding to CBG-based transmission in response to NACK-feedback corresponding to the transport block 510 according to an embodiment of the disclosure. Please refer to FIG. 14, a number of available bits for carrying the first information 1411 and the second information 1412 in the codebook 1410 are 3 bits. The number of filler bits for carrying the second information 1412 is 2 bits in the codebook 1410. In the embodiment, the transport 510 is not correctly decoded, a NACK for the transport block 510 is carried in the codebook 1410 as the first information 1411. Since the number of available bits for carrying the second information 1412 is less than the maximum number of CBGs per TB (herein, $N_{maxCBG}$ is 4), the UE 100 grouping the CBs by the processor 110 according to the number of available bits for carrying the second information 1412.

For example, N (the maximum number of CBGs per transport block) is 4, C (the number of available bits for carrying the second information) is 2, $C_1$ (the number of CBs per transport block is 8. M=min(N, C)=min(4, 2)=2;

$$K_1 = \left\lceil \frac{C_1}{M} \right\rceil = \left\lceil \frac{8}{2} \right\rceil = 4 \quad K_2 = \left\lfloor \frac{C_1}{M} \right\rfloor = \left\lfloor \frac{8}{2} \right\rfloor = 4$$

$M_1 = mod(C_1, M) = mod(8, 2) = 0$; . Since Mi=0, Mi-1=-1, the case of "the groups with the indices m as 0 to $M_1$-1" is not considered. For groups with the indices m as Mi to M-1 (e.g. group 0 to group 1), the group 0 (numbered as New_CBG#0) includes 4 CBs (e.g. CB#0 to CB#3). The group 1 (numbered as New_CBG#1) includes 4 CBs (e.g. CB#4 to CB#7). In response to the first information 1411 comprises the NACK, the second information 1412 may further comprise HARQ-ACK feedback for a group of CBs. It is assumed that CB#2 is not correctly decoded. That means that New_CBG#0 is not correctly decoded. Accordingly, {0, 1} is filled as the second information 1412 in the codebook 1410. The first bit in the second information 1412 represents HARQ-ACK feedback of New_CBG#0, and the second bit in the second information 1412 represents HARQ-ACK feedback of New_CBG#1.

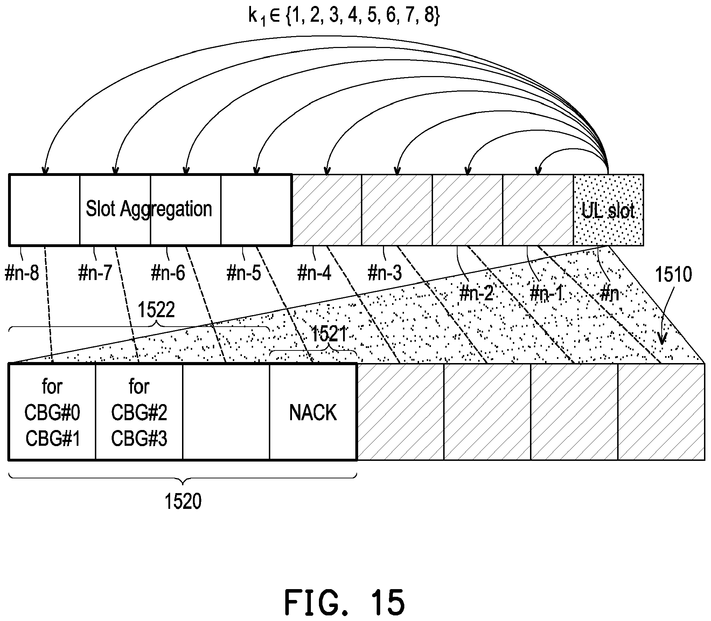

FIG. 15 is a schematic of a codebook corresponding to CBG-based transmission in response to NACK-feedback corresponding to the transport block 510 according to an embodiment of the disclosure. In the embodiment of FIG. 15, the parameter "pdsch-AggregationFactor" is 4. The size of the codebook 1510 is obtained by the first value × the second value. Herein, the first value is 8. The second value is 1 configured by a fixed value, a pre-determined value, a preconfigured value, or a configurable value. The HARQ-feedback information 1520 (including the first information 1521 and the second information 1522) for one HARQ process has 4 bits. For example, on the basis of the dividing of the transport block 510 in FIG. 5, the first bit of the second information 1522 is configure for CBG#0 and CBG#1, the second bit of the second information 1522 is configure for CBG#2 and CBG#3, the third bit of the second information 1522 is configured for another parameter with 1 bit.

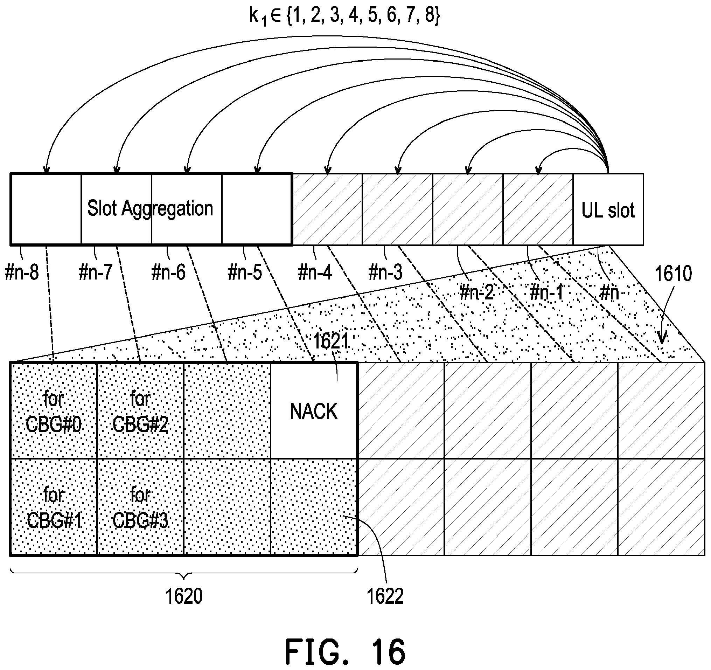

FIG. 16 is a schematic of a codebook corresponding to CBG-based transmission in response to NACK-feedback corresponding to the transport block 510 according to another embodiment of the disclosure. In the embodiment of FIG. 16, the parameter "pdsch-AggregationFactor" is 4. The size of the codebook 1610 is obtained by the first value × the second value. Herein, the first value is 8. The second value is configured to be less than or equal to the maximum number of CBGs per TB ($N_{maxCBG}$) based on a fixed value, a pre-determined value, a preconfigured value, or a configurable value. Herein, the second value is 2. The HARQ-feedback information 1620 for one HARQ process has 8 bits. One bit is configured for the first information 1621 and remaining 7 bits are configured for the second information 1622. In the second information 1622, 4 bits are configured for CBG#0, CBG#1, CBG#2, CBG#3 respectively, and remaining 3 bits may be configured for at least another parameter based on the priority order.

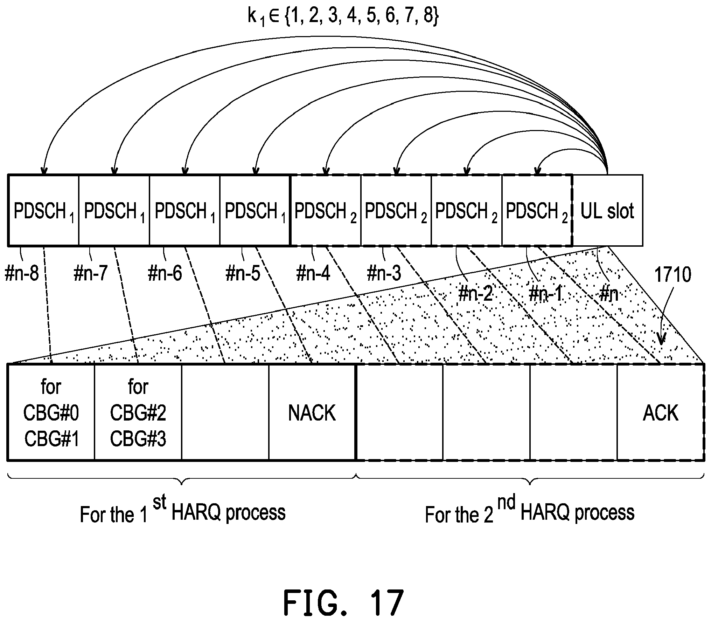

FIG. 17 is a schematic of codebooks corresponding to two HARQ processes according to an embodiment of the disclosure. In the embodiment of FIG. 17, there are two HARQ processes are executed in sequence. In the first HARQ process, 4 slots (slot # n-8 to slot #n-5) are scheduled, so the BS would transmit PDSCH₁ with a first transport block across 4 slot # n-8 to #n-5. In the second HARQ process, 4 slots (slot # n-4 to slot #n-1) are scheduled, so the BS would transmit PDSCH₂ with a second transport bloc across 4 slots (slot # n-4 to slot #n-1). The size of the codebook 1710 is 8 bits, wherein 4 bits is configured for the PDSCH₁ and 4 bits is configured for PDSCH₂.

It is to be understood by a person skilled in the art that the plurality of exemplary embodiments described above are specific examples of the following aspects.

(1st aspect) A method for performing a HARQ transmission at a UE according to the disclosure comprises: receiving a first configuration related to slot aggregation for PDSCH reception; receiving a DCI; receiving a PDSCH indicted by the DCI across a first number of aggregated slots; and transmitting a codebook comprising a first information and a second information.

(2nd aspect) In the method described in 1st aspect, the PDSCH comprises a transport block, and the transport block comprises a plurality of code blocks.

(3rd aspect) In the method described in 1st aspect or 2nd aspect, the first configuration is indicated via higher layer signaling.

(4th aspect) In the method described in 3rd aspect, the higher layer signaling comprises at least one of the followings: a radio resource control (RRC) signaling, a medium access control (MAC) signaling, or a radio link control (RLC) signaling.

(5th aspect) In the method described in one of 1st aspect to 4th aspect, the first number of aggregated slots is determined according to the first configuration.

(6th aspect) In the method described in one of 1st aspect to 5th aspect, the first number of aggregated slots is obtained by the DCI if the DCI indicates that the PDSCH comprises a retransmitted transport block.

(7th aspect) In the method described in one of 1st aspect to 6, the first number of aggregated slots is obtained by the first configuration if the DCI indicates that the PDSCH comprises a newly transmitted transport block.

(8th aspect) In the method described in one of 1st aspect to 7th aspect, the method further comprises: obtaining a size of the codebook which is related to a first value if the UE is configured with transport block based (TB-based) transmission, wherein the first value is related to a number of occasions for candidate PDSCH receptions.

(9th aspect) In the method described in one of 1st aspect to 8th aspect, the method further comprises: obtaining a size of the codebook which is related to a first value and a second value if the UE is configured with code block grouping based (CBG-based) transmission, wherein the first value is related to a number of occasions for candidate PDSCH receptions and the second value is related to one of followings: a maximum number of code block groups per transport block, a fixed value, a pre-determined value, a preconfigured value, or a configurable value.

(10th aspect) In the method described in one of 1st aspect to 9th aspect, the first information comprises an acknowledgement (ACK) or a negative acknowledgement (NACK) associated with a HARQ process for the PDSCH.

(11th aspect) In the method described in one of 1st aspect to 10th aspect, the method further comprises: obtaining a number of available bits for carrying the second information which is related to a size of the codebook and a size of the first information.

(12th aspect) In the method described in one of 1st aspect to 11th aspect, the second information carried in the codebook is determined with a priority order.

(13th aspect) In the method described in 12th aspect, the priority order is predetermined or default.

(14th aspect) In the method described in 12th aspect, the priority order is determined according to at least one of following parameters: symbol number, slot number, subframe number, frame number, serving cell identifier, or bandwidth part identifier.

(15th aspect) In the method described in 12th aspect, the second information carried in the codebook is determined according to at least one of the following parameters: a number of available bits in the codebook or the priority order.

(16th aspect) In the method described in one of 1st aspect to 15th aspect, the second information comprises at least one of the following parameters: information related to battery life, information related to signal to noise plus interference ratio (SINR), information related to modulation and coding scheme (MCS), information related to channel quality indication (CQI), information related to quasi co-location (QCL) assumption, or information related to transmission power.

(17th aspect) In the method described in 16th aspect, the information related to SINR is determined according to at least one of following radio resources: the PDSCH reception, a reference signal of a serving cell, or a reference signal of neighbor cell.

(18th aspect) In the method described in 16th aspect, the information related to CQI is determined according to at least one of following radio resources: the PDSCH reception, a reference signal of a serving cell or a reference signal of neighbor cell.

(19th aspect) In the method described in 16th aspect, the information related to QCL assumption is determined according to at least one of following radio resources: the PDSCH reception, a reference signal of a serving cell, or a reference signal of neighbor cell.

(20th aspect) In the method described in 16th aspect, the information related to transmission power is determined according to at least one of following radio resources: the PDSCH reception, a reference signal of a serving cell, or a reference signal of neighbor cell.

(21th aspect) In the method described in one of 1st aspect to 20th aspect, wherein in response to the first information comprises a NACK, the second information comprises a second number of aggregated slots.

(22th aspect) In the method described in one of 1st aspect to 21th aspect, the method further comprises: receiving a second configuration related to code block groups for the PDSCH reception, wherein the code block groups are grouped from a plurality of code blocks comprised in a transport block of the PDSCH.

(23th aspect) In the method described in 22th aspect, the second configuration is indicated via higher layer signaling.

(24th aspect) In the method described in 23th aspect, the higher layer signaling comprises at least one of the following signaling: a RRC signaling, a MAC signaling, or a radio link control (RLC) signaling.

(25th aspect) In the method described in 22th aspect, in response to the first information comprises a NACK, the second information comprises HARQ-ACK feedback for the code block groups (521 to 524) of the PDSCH.

(26th aspect) In the method described in 22th aspect, in response to the first information comprises a NACK, the second information comprises HARQ-ACK feedback for at least one group of the code blocks of the PDSCH.

(27th aspect) In the method described in 22th aspect, the method further comprises: determining a maximum number of the code block groups of the transport block according to the second configuration.

(28th aspect) In the method described in 27th aspect, the method further comprises: grouping of the code blocks according to the maximum number of code block groups and a number of available bits for carrying the second information.

(29th aspect) In the method described in 28th aspect, the method further comprises: calculating $M=\min(N, C)$, wherein N is the maximum number of code block groups per transport block, and C is the number of available bits for carrying the second information;

the grouping of the code blocks (511 to 518) is obtained based on following:

calculating $M_1=\mathrm{mod}(C_1, M)$, $K_1=\left\lceil \dfrac{C_1}{M} \right\rceil$, and $K_2=\left\lfloor \dfrac{C_1}{M} \right\rfloor$, wherein $C_1$ is a number of code blocks (511 to 518) per transport block (510);

setting index m as 0 to $M_1-1$;

for groups with the indices m as 0 to Mi-1, setting a group with index m to include $K_1$ code block with indices $m \cdot K_1+k$, wherein k=0, 1, ..., $K_1-1$;

for groups with indices m as Mi to M-1, setting the group with index m to include $K_2$ code block with indices $M_1 \cdot K_1+(m-M_1) \cdot K_2+k$, wherein k=0, 1, ..., $K_2-1$.

To sum up, embodiments of the disclosure provide a method for performing a HARQ transmission at the UE. In the above embodiments, effective information is filled in the space that was originally filled with NACK, thereby improving the transmission efficiency and radio resource utilization. Therefore, the disclosure improves the transmission efficiency and radio resource utilization.

[REFERENCE SIGNS LIST]

100: user equipment (UE)
110: processor
120: storage
130: communication component
301: downlink control information (DCI)
510: transport block
511~518: code block (CB)
521~524: code block group (CBG)
610, 710, 810, 1110, 1210, 1310, 1410, 1510, 1610, 1710: codebook
611, 711, 811, 1111, 1211, 1311, 1411, 1521, 1621: first information
612, 712-1, 712-2, 812-1, 812-2, 1112, 1212, 1312, 1412, 1522, 1622: second information 1121, 1122: storage space
1210-1-1210-4: area
1520, 1620: HARQ-feedback information
#n-8~#n-1, #n~#n+3, #n+k, #y-2~#y: slot
$k_1$: parameter
S205~S220: step for performing HARQ transmission
S901~S907: step for determining the second information of the codebook

S1001~S1007: step for determining the second information of the codebook

**Claims**

1. A method for performing a hybrid automatic repeat request (HARQ) transmission at a user equipment (UE) (100), **characterized by** comprising:

   receiving (S205) a first configuration related to slot aggregation for physical downlink shared channel (PDSCH) reception;
   receiving (S210) a downlink control information (DCI) (301);
   receiving (S215) a PDSCH indicted by the DCI (301) across a first number of aggregated slots; and
   transmitting (S220) a codebook (610, 710, 810, 1110, 1210, 1310, 1410, 1510, 1610, 1710) comprising a first information (611, 711, 811, 1111, 1211, 1311, 1411, 1521, 1621) and a second information (612, 712-1, 712-2, 812-1, 812-2, 1112, 1212, 1312, 1412, 1522, 1622).

2. A user equipment, **characterized by** comprising:

   a storage (120), configured to store a program; and
   a processor (110), coupled to the storage (120), and configured to execute the program to:

   receive a first configuration related to slot aggregation for PDSCH reception;
   receive a DCI (301);
   receive a PDSCH indicted by the DCI (301) across a first number of aggregated slots; and
   transmit a codebook (610, 710, 810, 1110, 1210, 1310, 1410, 1510, 1610, 1710) comprising a first information (611, 711, 811, 1111, 1211, 1311, 1411, 1521, 1621) and a second information (612, 712-1, 712-2, 812-1, 812-2, 1112, 1212, 1312, 1412, 1522, 1622).

3. The user equipment according to claim 2, wherein the PDSCH comprises a transport block(510), and the transport block (510) comprises a plurality of code blocks (511 to 518).

4. The user equipment according to claim 2 or 3, wherein the first configuration is indicated via higher layer signaling.

5. The user equipment according to claim 4, wherein the higher layer signaling comprises at least one of the followings: a radio resource control (RRC) signaling, a medium access control (MAC) signaling, or a radio link control (RLC) signaling.

6. The user equipment according to one of claims 2 to 5, wherein the first number of aggregated slots is determined according to the first configuration.

7. The user equipment according to one of claims 2 to 6, wherein the first number of aggregated slots is obtained by the DCI (301) if the DCI (301) indicates that the PDSCH comprises a retransmitted transport block (510).

8. The user equipment according to one of claims 2 to 7, wherein the first number of aggregated slots is obtained by the first configuration if the DCI (301) indicates that the PDSCH comprises a newly transmitted transport block (510).

9. The user equipment according to one of claims 2 to 8, wherein the processor (110) is configured to execute the program to:
   obtain a size of the codebook (610, 710, 810, 1110, 1210, 1310, 1410, 1510, 1610, 1710) which is related to a first value if the UE is configured with transport block (510) based (TB-based) transmission, wherein the first value is related to a number of occasions for candidate PDSCH receptions.

10. The user equipment according to one of claims 2 to 9, wherein the processor (110) is configured to execute the program to:
    obtain a size of the codebook (610, 710, 810, 1110, 1210, 1310, 1410, 1510, 1610, 1710) which is related to a first value and a second value if the UE is configured with code block grouping based (CBG-based) transmission, wherein the first value is related to a number of occasions for candidate PDSCH receptions and the second value is related to one of followings: a maximum number of code block groups (521 to 524) per transport block (510), a fixed value, a pre-determined value, a preconfigured value, or a configurable value.

11. The user equipment according to one of claims 2 to 10, wherein the first information (611, 711, 811, 1111, 1211, 1311, 1411, 1521, 1621) comprises an acknowledgement (ACK) or a negative acknowledgement (NACK) associated with a HARQ process for the PDSCH.

12. The user equipment according to one of claims 2 to 11, wherein the processor (110) is configured to execute the program to:
obtain a number of available bits for carrying the second information (612, 712-1, 712-2, 812-1, 812-2, 1112, 1212, 1312, 1412, 1522, 1622) which is related to a size of the codebook (610, 710, 810, 1110, 1210, 1310, 1410, 1510, 1610, 1710) and a size of the first information (611, 711, 811, 1111, 1211, 1311, 1411, 1521, 1621).

13. The user equipment according to one of claims 2 to 12, wherein the second information (612, 712-1, 712-2, 812-1, 812-2, 1112, 1212, 1312, 1412, 1522, 1622) carried in the codebook (610, 710, 810, 1110, 1210, 1310, 1410, 1510, 1610, 1710) is determined with a priority order.

14. The user equipment according to claim 13, wherein the priority order is predetermined or default.

15. The user equipment according to claim 13, wherein the priority order is determined according to at least one of following parameters: symbol number, slot number, subframe number, frame number, serving cell identifier, or bandwidth part identifier.

16. The user equipment according to claim 13, wherein the second information (612, 712-1, 712-2, 812-1, 812-2, 1112, 1212, 1312, 1412, 1522, 1622) carried in the codebook (610, 710, 810, 1110, 1210, 1310, 1410, 1510, 1610, 1710) is determined according to at least one of the following parameters: a number of available bits in the codebook (610, 710, 810, 1110, 1210, 1310, 1410, 1510, 1610, 1710) or the priority order.

17. The user equipment according to one of claims 2 to 16, wherein the second information (612, 712-1, 712-2, 812-1, 812-2, 1112, 1212, 1312, 1412, 1522, 1622) comprises at least one of the following parameters: information related to battery life, information related to signal to noise plus interference ratio (SINR), information related to modulation and coding scheme (MCS), information related to channel quality indication (CQI), information related to quasi co-location (QCL) assumption, or information related to transmission power.

18. The user equipment according to claim 17, wherein the information related to SINR is determined according to at least one of following radio resources:
the PDSCH reception, a reference signal of a serving cell, or a reference signal of neighbor cell.

19. The user equipment according to claim 17, wherein the information related to CQI is determined according to at least one of following radio resources:

the PDSCH reception, a reference signal of a serving cell or a reference signal of neighbor cell.

20. The user equipment according to claim 17, wherein the information related to QCL assumption is determined according to at least one of following radio resources:
the PDSCH reception, a reference signal of a serving cell, or a reference signal of neighbor cell.

21. The user equipment according to claim 17, wherein the information related to transmission power is determined according to at least one of following radio resources:
the PDSCH reception, a reference signal of a serving cell, or a reference signal of neighbor cell.

22. The user equipment according to one of claims 2 to 21, wherein in response to the first information (611, 811, 1111, 1211, 1411, 1521, 1621) comprises a NACK, the second information (612, 712-1, 712-2, 812-1, 812-2, 1112, 1212, 1312, 1412, 1522, 1622) comprises a second number of aggregated slots.

23. The user equipment according to one of claims 2 to 22, wherein the processor (110) is configured to execute the program to:
receive a second configuration related to code block groups (521 to 524) for the PDSCH reception, wherein the code block groups (521 to 524) are grouped from a plurality of code blocks (511 to 518) comprised in a transport block (510) of the PDSCH.

24. The user equipment according to claim 23, wherein the second configuration is indicated via higher layer signaling.

25. The user equipment according to claim 24, wherein the higher layer signaling comprises at least one of the following signaling: a RRC signaling, a MAC signaling, or a radio link control (RLC) signaling.

26. The user equipment according to claim 23, wherein in response to the first information (611, 811, 1111, 1211, 1411, 1521, 1621) comprises a NACK, the second information (612, 712-1, 712-2, 812-1, 812-2, 1112, 1212, 1312, 1412, 1522, 1622) comprises HARQ-ACK feedback for the code block groups (521 to 524) of the PDSCH.

27. The user equipment according to claim 23, wherein in response to the first information (611, 811, 1111, 1211, 1411, 1521, 1621) comprises a NACK, the second information (612, 712-1, 712-2, 812-1, 812-2, 1112, 1212, 1312, 1412, 1522, 1622) comprises HARQ-ACK feedback for at least one group of the code blocks of the PDSCH.

28. The user equipment according to claim 23, wherein the processor (110) is configured to execute the program to: determine a maximum number of the code block groups (521 to 524) of the transport block (510) according to the second configuration.

29. The user equipment according to claim 28, wherein the processor (110) is configured to execute the program to: group of the code blocks (511 to 518) according to the maximum number of code block groups (521 to 524) and a number of available bits for carrying the second information (612, 712-1, 712-2, 812-1, 812-2, 1112, 1212, 1312, 1412, 1522, 1622).

30. The user equipment according to claim 29, wherein the processor (110) is configured to execute the program to:

calculate $M=\min(N, C)$, wherein N is the maximum number of code block groups (521 to 524) per transport block (510), and C is the number of available bits for carrying the second information (612, 712-1, 812-2, 1112, 1212, 1312, 1412, 1522, 1622);
the grouping of the code blocks (511 to 518) is obtained based on following:

calculate $M_1=\mod(C_1, M)$, $K_1=\left\lceil \dfrac{C_1}{M} \right\rceil$, and $K_2=\left\lfloor \dfrac{C_1}{M} \right\rfloor$, wherein $C_1$ is a number of code blocks (511 to 518) per transport block (510);
set index m as 0 to $M_1-1$;
for groups with the indices m as 0 to Mi-1, set a group with index m to include $K_1$ code block with indices $m\cdot K_1+k$, wherein $k=0, 1, ..., K_1-1$;
for groups with indices m as Mi to M-1, set the group with index m to include $K_2$ code block with indices $M_1\cdot K_1+(m-M_1)\cdot K_2+k$, wherein $k=0, 1, ..., K_2-1$.

FIG. 1

Receiving a first configuration related to slot
aggregation for PDSCH reception — S205

Receiving a DCI — S210

Receiving a PDSCH indicted by the DCI across a first
number of aggregated slots — S215

Transmitting a codebook comprising a first information
and a second information — S220

# FIG. 2

DCI | PDSCH | PDSCH | PDSCH | PDSCH

301     #n     #n+1     #n+2     #n+3

# FIG. 3

Initial transmission     NACK     Retransmission

| | Slot Aggregation | | | · · · | UL slot | · · · | | Slot Aggregation | | |

#n-3    #n-2    #n-1    #n     #n+k     #y-3    #y-2    #y-1    #y

# FIG. 4

510

| Transport Block |
|---|

511   512   513   514   515   516   517   518

| CB#0 | CB#1 | CB#2 | CB#3 | CB#4 | CB#5 | CB#6 | CB#7 |
|---|---|---|---|---|---|---|---|

| CBG#0 | CBG#1 | CBG#2 | CBG#3 |
|---|---|---|---|

521   522   523   524

# FIG. 5

$k_1 \in \{1, 2, 3, 4, 5, 6, 7, 8\}$

| | | | Slot Aggregation | | | | | UL slot |
|---|---|---|---|---|---|---|---|---|
| #n-8 | #n-7 | #n-6 | #n-5 | #n-4 | #n-3 | #n-2 | #n-1 | #n |

610

612                                                                        611

| NACK | NACK | NACK | NACK | NACK | NACK | NACK | ACK/NACK |
|---|---|---|---|---|---|---|---|

FIG. 6

$$k_1 \in \{1, 2, 3, 4, 5, 6, 7, 8\}$$

| | | | Slot Aggregation | | | | | UL slot |
|---|---|---|---|---|---|---|---|---|

#n-8　　#n-7　　#n-6　　#n-5　　#n-4　　#n-3　　#n-2　　#n-1　　#n

710

712-1　　　　　　711

| Information related to CQI | | | | | | ACK |
|---|---|---|---|---|---|---|

# FIG. 7A

$$k_1 \in \{1, 2, 3, 4, 5, 6, 7, 8\}$$

| | | | Slot Aggregation | | | | UL slot |
|---|---|---|---|---|---|---|---|

#n-8   #n-7   #n-6   #n-5   #n-4   #n-3   #n-2   #n-1   #n

710

712-2                                          711

| Information related to CQI | Information related to MCS | Information related to QCL assumption | ACK |
|---|---|---|---|

FIG. 7B

$k_1 \in \{1, 2, 3, 4, 5, 6, 7, 8\}$

| | | | Slot Aggregation | | | | | UL slot |
|---|---|---|---|---|---|---|---|---|

#n-8    #n-7    #n-6    #n-5    #n-4    #n-3    #n-2    #n-1    #n

810

812-1    811

| Information related to CQI | Information related to MCS | | | | NACK |
|---|---|---|---|---|---|

FIG. 8A

$$k_1 \in \{1, 2, 3, 4, 5, 6, 7, 8\}$$

| | | | Slot Aggregation | | | | | UL slot |
|---|---|---|---|---|---|---|---|---|

#n-8  #n-7  #n-6  #n-5  #n-4  #n-3  #n-2  #n-1  #n

810

812-2                                      811

| Number of slots for retransmission | Information related to CQI | Information related to MCS | | NACK |
|---|---|---|---|---|

FIG. 8B

Determined at least one parameter to be carried on the codebook — S901

If the transport block is decoded successfully — S903

Yes

No

The at least one parameter comprises:
the number of aggregated slots for retransmission — S905

The at least one parameter comprises:
information related to battery life, information related to SINR, information related to MCS, information related to CQI, information related to QCL assumption, information related to transmission power — S907

FIG. 9

Determined at least one parameter to be carried on the codebook ⟶ S1001

If the transport block is decoded successfully ⟶ S1003

Yes

No

The at least one parameter comprises:
HARQ-ACK feedback for at least one group of the CBs, and the second number of aggregated slots for its retransmission ⟶ S1005

The at least one parameter comprises:
information related to battery life, information related to SINR, information related to MCS, information related to CQI, information related to QCL assumption, information related to transmission power ⟶ S1007

FIG. 10

510

Transport Block

| CB#0 | CB#1 | CB#2 | CB#3 | CB#4 | CB#5 | CB#6 | CB#7 |

| CBG#0 | CBG#1 | CBG#2 | CBG#3 |

$k_1 \in \{1, 2, 3, 4, 5, 6, 7, 8\}$

| | | | Slot Aggregation | | | | UL slot |

#n-8   #n-7   #n-6   #n-5   #n-4   #n-3   #n-2   #n-1   #n

1110

1112                                          1111

| 1 | 0 | 1 | 1 | 1 | 0 | NACK |

1121                        1122

# FIG. 11

$k_1 \in \{1, 2, 3, 4, 5, 6, 7, 8\}$

| | | | Slot Aggregation | | | | | UL slot |
|---|---|---|---|---|---|---|---|---|

#n-8    #n-7    #n-6    #n-5    #n-4    #n-3    #n-2    #n-1    #n    1210

1212    1211

| | | | | | | | | |
|---|---|---|---|---|---|---|---|---|
| 1210-1 | NACK | NACK | NACK | NACK | NACK | NACK | NACK | ACK/ NACK |
| 1210-2 | NACK | NACK | NACK | NACK | NACK | NACK | NACK | ACK/ NACK |
| 1210-3 | NACK | NACK | NACK | NACK | NACK | NACK | NACK | ACK/ NACK |
| 1210-4 | NACK | NACK | NACK | NACK | NACK | NACK | NACK | ACK/ NACK |

FIG. 12

$k_1 \in \{1, 2, 3, 4, 5, 6, 7, 8\}$

Slot Aggregation

UL slot

#n-8   #n-7   #n-6   #n-5   #n-4   #n-3   #n-2   #n-1   #n

1312   1311   1310

Information related to CQI

ACK

FIG. 13

EP 4 207 653 A1

32

$k_1 \in \{1, 2, 3, 4, 5, 6, 7, 8\}$

Slot Aggregation

UL slot

#n-8    #n-7    #n-6    #n-5    #n-4    #n-3    #n-2    #n-1    #n

1412    1411    1410

0    1    NACK

CB#0    CB#1    CB#2    CB#3    CB#4    CB#5    CB#6    CB#7

New_CBG#0    New_CBG#1

FIG. 14

EP 4 207 653 A1

FIG. 15

EP 4 207 653 A1

FIG. 16

$k_1 \in \{1, 2, 3, 4, 5, 6, 7, 8\}$

| PDSCH$_1$ | PDSCH$_1$ | PDSCH$_1$ | PDSCH$_1$ | PDSCH$_2$ | PDSCH$_2$ | PDSCH$_2$ | PDSCH$_2$ | UL slot |

#n-8 #n-7 #n-6 #n-5 #n-4 #n-3 #n-2 #n-1 #n

1710

| for CBG#0 CBG#1 | for CBG#2 CBG#3 | | NACK | | | | ACK |

For the 1$^{st}$ HARQ process     For the 2$^{nd}$ HARQ process

FIG. 17

## EP 4 207 653 A1

## EUROPEAN SEARCH REPORT

Application Number

EP 22 21 5015

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MCC SUPPORT: "Final Report of 3GPP TSG RAN WG1 #105-e v1.0.0 (Online meeting, 10th – 27th May 2021)", 3GPP DRAFT; R1-2106402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210816 – 20210827 11 August 2021 (2021-08-11), XP052041685, Retrieved from the Internet: URL:https://ftp.3gpp.org/tsg_ran/WG1_RL1/T SGR1_106-e/Docs/R1-2106402.zip Final_Minutes_report_RAN1#105-e_v100.docx [retrieved on 2021-08-11] * pages 29,57,62,68 * | 1-11, 13-22 | INV. H04L1/1607 H04L1/08 H04L1/1829 H04L1/1867 |
| X | ERICSSON: "CSI Feedback Enhancements for IIoT/URLLC", 3GPP DRAFT; R1-2106679, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210816 – 20210827 7 August 2021 (2021-08-07), XP052037960, Retrieved from the Internet: URL:https://ftp.3gpp.org/tsg_ran/WG1_RL1/T SGR1_106-e/Docs/R1-2106679.zip R1-2106679 CSI Feedback Enhancements for IIoT URLLC.docx [retrieved on 2021-08-07] * pages 4-6 * | 1-30 | TECHNICAL FIELDS SEARCHED (IPC) H04L |

-/--

The present search report has been drawn up for all claims

| Place of search | Date of completion of the search | Examiner |
|---|---|---|
| The Hague | 20 January 2023 | Besse, Jean |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

37

Europäisches
Patentamt

European
Patent Office

Office européen
des brevets

# EUROPEAN SEARCH REPORT

Application Number

EP 22 21 5015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MODERATOR (ZTE): "Summary#3 of AI 8.4.3 for HARQ in NTN", 3GPP DRAFT; R1-2112664, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20211111 - 20211119 20 November 2021 (2021-11-20), XP052097926, Retrieved from the Internet: URL:https://ftp.3gpp.org/tsg_ran/WG1_RL1/T SGR1_107-e/Docs/R1-2112664.zip R1-2112664 Summary#3 of AI 8.4.3 for HARQ in NTN.docx [retrieved on 2021-11-20] * pages 14,15,32,33 * ----- | 1,2, 4-11, 13-16,22 | |

TECHNICAL FIELDS
SEARCHED     (IPC)

The present search report has been drawn up for all claims

| Place of search | Date of completion of the search | Examiner |
|---|---|---|
| The Hague | 20 January 2023 | Besse, Jean |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  ........................................................................
& : member of the same patent family, corresponding
    document

EPO FORM 1503 03.82 (P04C01)